(19) Europäisches Patentamt
European Patent Office
Office européen des brevets

(11) EP 0 582 579 B1

(12) EUROPÄISCHE PATENTSCHRIFT

(45) Veröffentlichungstag und Bekanntmachung des Hinweises auf die Patenterteilung:
**28.05.1997 Patentblatt 1997/22**

(21) Anmeldenummer: **92906483.0**

(22) Anmeldetag: **06.03.1992**

(51) Int Cl.6: **C09B 55/00**, C09B 23/04, C09B 23/02, B41M 5/38

(86) Internationale Anmeldenummer:
**PCT/EP92/00505**

(87) Internationale Veröffentlichungsnummer:
**WO 92/19684 (12.11.1992 Gazette 1992/28)**

(54) **N-AMINOPYRIDONFARBSTOFFE**

N-AMINOPYRIDONE DYES

COLORANTS A BASE DE N-AMINOPYRIDONE

(84) Benannte Vertragsstaaten:
**BE CH DE ES FR GB IT LI NL SE**

(30) Priorität: **03.05.1991 DE 4114456**
**22.10.1991 DE 4134805**

(43) Veröffentlichungstag der Anmeldung:
**16.02.1994 Patentblatt 1994/07**

(73) Patentinhaber: **BASF Aktiengesellschaft**
**67063 Ludwigshafen (DE)**

(72) Erfinder:
- **ETZBACH, Karl-Heinz**
**D-6710 Frankenthal (DE)**
- **SCHEFCZIK, Ernst**
**D-6700 Ludwigshafen (DE)**
- **SENS, Rüdiger**
**D-6800 Mannheim 1 (DE)**
- **WIESENFELDT, Matthias**
**D-6704 Mutterstadt (DE)**

(56) Entgegenhaltungen:
**EP-A- 0 019 298**
**EP-A- 0 416 434**
**DE-A- 2 012 050**
**FR-A- 2 426 717**
**GB-A- 2 047 419**
**GB-A- 2 156 373**
**US-A- 5 026 678**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 582 579 B1

Printed by Jouve, 75001 PARIS (FR)

## Beschreibung

Die vorliegende Erfindung betrifft neue Pyridonfarbstoffe der Formel I

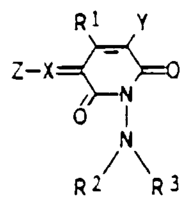

(I),

in der

$R^1$ $C_1$-$C_4$-Alkyl,

$R^2$ und $R^3$ gleich oder verschieden sind und unabhängig voneinander jeweils Wasserstoff, gegebenenfalls substituiertes $C_1$-$C_{12}$-Alkyl, $C_5$-$C_7$-Cycloalkyl, gegebenenfalls substituiertes Phenyl, gegebenenfalls substituiertes Pyridyl, gegebenenfalls substituiertes $C_1$-$C_{12}$-Alkanoyl, $C_1$-$C_{12}$-Alkoxycarbonyl, gegebenenfalls substituiertes $C_1$-$C_{12}$-Alkylsulfonyl, $C_5$-$C_7$-Cycloalkylsulfonyl, gegebenenfalls substituiertes Phenylsulfonyl, gegebenenfalls substituiertes Pyridylsulfonyl, gegebenenfalls substituiertes Benzoyl, Pyridylcarbonyl oder Thienylcarbonyl oder $R^2$ und $R^3$ zusammen mit dem sie verbindenden Stickstoffatom gegebenenfalls durch $C_1$-$C_4$-Alkyl substituiertes Succinimido, gegebenenfalls durch $C_1$-$C_4$-Alkyl substituiertes Phthalimido oder einen fünf- oder sechsgliedrigen gesättigten heterocyclischen Rest, der gegebenenfalls weitere Heteroatome enthält,

X CH oder Stickstoff,

Y Cyano oder einen Rest der Formel CO-W, CO-OW oder CO-NHW, worin W für Wasserstoff, $C_1$-$C_8$-Alkyl, das gegebenenfalls substituiert ist und durch ein oder zwei Sauerstoffatome in Etherfunktion unterbrochen sein kann, $C_5$-$C_7$-Cycloalkyl, Phenyl oder Tolyl steht, und

Z einen aromatischen carbocyclischen oder heterocyclischen Rest bedeuten

sowie ein Verfahren zu ihrer thermischen Übertragung.

Aus der EP-A-416 434 sind bereits Pyridonfarbstoffe bekannt. Es hat sich jedoch gezeigt, daß die Farbstoffe des Standes der Technik noch Mängel in ihren anwendungstechnischen Eigenschaften aufweisen.

Die US-A-5 026 678 beschreibt Methinfarbstoffe auf Basis von N-acylaminosubstituierten Pyridonen.

Aufgabe der vorliegenden Erfindung war es daher, neue N-Aminopyridonfarbstoffe bereitzustellen, die sich in vorteilhafter Weise zur thermischen übertragung eignen.

Demgemäß wurden die eingangs näher bezeichneten Pyridonfarbstoffe der Formel I gefunden.

Aromatische carbocyclische oder heterocyclische Reste Z leiten sich beispielsweise aus der Anilin-, Aminonaphthalin-, Indol-, Chinolin-, Benzoxazin- oder Aminothiazolreihe ab.

Bevorzugt sind Pyridonfarbstoffe der Formel I, in der

Z einen Rest der Formel

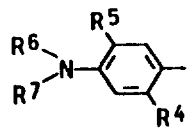, (IIa)

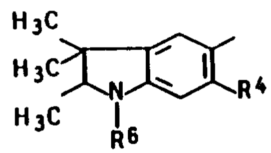, (IIb)

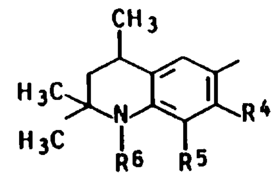, (IIc)

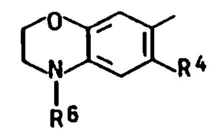, (IId)

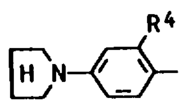, (IIe)

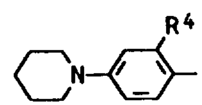, (IIf)

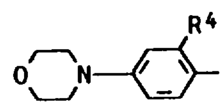, (IIg)

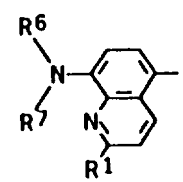, (IIh)

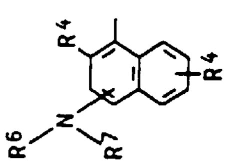

(IIi)

,

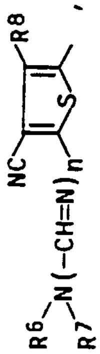

(IIj)

,

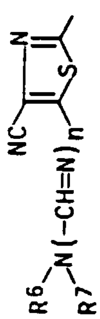

(IIk)

,

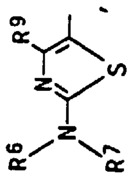

(IIl)

,

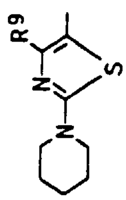

(IIm)

,

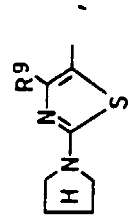

(IIn)

,

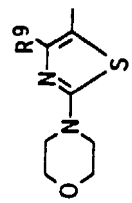

(IIo)

oder

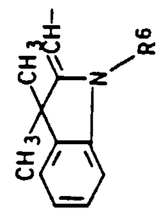

(IIp)

bedeutet, worin

n 0 oder 1,

$R^4$ für Wasserstoff, Methyl, Methoxy, $C_1$-$C_4$-Alkylsulfonylamino, $C_1$-$C_4$-Mono- oder Dialkylaminosulfonylamino oder den Rest -NHCOR$^{10}$ oder -NHCO$_2$R$^{10}$, wobei $R^{10}$ die Bedeutung von Phenyl, Benzyl, Tolyl oder $C_1$-$C_8$-Alkyl, das gegebenenfalls durch ein oder zwei Sauerstoffatome in Etherfunktion unterbrochen ist, besitzt,

$R^5$ für Wasserstoff, Methyl, Methoxy oder Ethoxy,

$R^6$ und $R^7$ gleich oder verschieden sind und unabhängig voneinander jeweils für Wasserstoff, $C_1$-$C_8$-Alkyl, das gegebenenfalls substituiert ist und durch ein oder zwei Sauerstoffatome in Etherfunktion unterbrochen sein kann, $C_3$-$C_4$-Alkenyl, $C_5$-$C_7$-Cycloalkyl, Phenyl oder Tolyl oder zusammen mit dem sie verbindenden Stickstoffatom für einen fünf- oder sechsgliedrigen gesättigten heterocyclischen Rest, der gegebenenfalls weitere Heteroatome enthält,

$R^8$ Halogen und

$R^9$ für Wasserstoff, Halogen, $C_1$-$C_6$-Alkyl, gegebenenfalls substituiertes Phenyl, gegebenenfalls substituiertes Benzyl, Cyclohexyl, Thienyl, Hydroxy oder $C_1$-$C_8$-Monoalkylamino stehen und

$R^1$ die obengenannte Bedeutung besitzt.

Alle in der Formel der erfindungsgemäßen Pyridonfarbstoffe auftretenden Alkylgruppen können sowohl geradkettig als auch verzweigt sein.

Wenn in der Formel der erfindungsgemäßen Pyridonfarbstoffe substituierte Alkylgruppen auftreten, so können als Substituenten z.B. Cyano, Phenyl, Tolyl, $C_1$-$C_6$-Alkanoyloxy, $C_1$-$C_4$-Alkoxycarbonyl oder $C_1$-$C_4$-Alkoxycarbonyloxy, wobei im letzten Fall die Alkoxygruppe durch Phenyl oder $C_1$-$C_4$-Alkoxy substituiert sein kann, in Betracht kommen.

Wenn in der Formel der erfindungsgemäßen Pyridonfarbstoffe substituierte Phenylgruppen auftreten, so können als Substituenten z.B. $C_1$-$C_4$-Alkyl- oder $C_1$-$C_4$-Alkoxy in Betracht kommen.

Reste W, $R^1$, $R^2$, $R^3$, $R^6$, $R^7$, $R^9$ und $R^{10}$ sind z.B. Methyl, Ethyl, Propyl, Isopropyl, Butyl, Isobutyl oder sec-Butyl.

Geeignete Reste W, $R^6$, $R^7$, $R^9$ und $R^{10}$ sind weiterhin z.B. Pentyl, Isopentyl, Neopentyl, tert-Pentyl, Hexyl oder 2-Methylpentyl.

Reste W, $R^6$, $R^7$ und $R^{10}$ sind weiterhin z.B. Heptyl, Octyl, Isooctyl oder 2-Ethylhexyl.

Reste $R^2$ und $R^3$ sind weiterhin z.B. Nonyl, Isononyl, Decyl, Isodecyl, Undecyl oder Dodecyl (Die obigen Bezeichnungen Isooctyl, Isononyl oder Isodecyl sind Trivialbezeichnungen und stammen von den nach der Oxosynthese erhaltenen Alkoholen - vgl. dazu Ullmanns Encyklopädie der technischen Chemie, 4. Auflage, Band 7, Seiten 215 bis 217, sowie Band 11, Seiten 435 und 436.), Phenyl, 2-, 3- oder 4-Methylphenyl, 2-, 3- oder 4-Methoxyphenyl, Pyridyl, 2-, 3- oder 4-Methylpyridyl, 2-, 3- oder 4-Methoxypyridyl, Formyl, Acetyl, Propionyl, Butyryl, Isobutyryl, Pentanoyl, Hexanoyl, Heptanoyl, Octanoyl, 2-Ethylhexanoyl, Methoxycarbonyl, Ethoxycarbonyl, Propoxycarbonyl, Isopropoxycarbonyl, Butoxycarbonyl, Methylsulfonyl, Ethylsulfonyl, Propylsulfonyl, Isopropylsulfonyl, Butylsulfonyl, Cyclopentylsulfonyl, Cyclohexylsulfonyl, Cycloheptylsulfonyl, Phenylsulfonyl, Tolylsulfonyl, Pyridylsulfonyl, Benzoyl, 2-, 3- oder 4-Methylbenzoyl, 2-, 3- oder 4-Methoxybenzoyl, Thien-2-ylcarbonyl oder Thien-3-ylcarbonyl.

Reste W, $R^6$, $R^7$ und $R^{10}$ sind weiterhin z.B. 2-Methoxyethyl, 2- oder 3-Methoxypropyl, 2-Ethoxyethyl, 2- oder 3-Ethoxypropyl, 2-Propoxyethyl, 2- oder 3-Propoxypropyl, 2-Butoxyethyl, 2- oder 3-Butoxypropyl, 3,6-Dioxaheptyl oder 3,6-Dioxaoctyl.

Reste W, $R^2$, $R^3$, $R^6$ und $R^7$ sind weiterhin z.B. 2-Cyanoethyl, 2- oder 3-Cyanopropyl, 2-Acetyloxyethyl, 2- oder 3-Acetyloxypropyl, 2-Isobutyryloxyethyl, 2- oder 3-Isobutyryloxypropyl, 2-Methoxycarbonylethyl, 2- oder 3-Methoxycarbonylpropyl, 2-Ethoxycarbonylethyl, 2- oder 3-Ethoxycarbonylpropyl 2-Methoxycarbonyloxyethyl, 2- oder 3-Methoxycarbonyloxypropyl, 2-Ethoxycarbonyloxyethyl, 2- oder 3-Ethoxycarbonyloxypropyl, 2-Butoxycarbonyloxyethyl, 2- oder 3-Butoxycarbonyloxypropyl, 2-(2-Phenylethoxycarbonyloxy)ethyl, 2- oder 3-(2-Phenylethoxycarbonyloxy)propyl, 2-(2-Ethoxyethoxycarbonyloxy)ethyl, 2- oder 3-(2-Ethoxyethoxycarbonyloxy)propyl, Benzyl, 2-Methylbenzyl, 1- oder 2-Phenylethyl, Cyclopentyl, Cyclohexyl, Cycloheptyl oder 2-, 3- oder 4-Methylphenyl.

Reste $R^4$ sind z.B. Methylsulfonylamino, Ethylsulfonylamino, Propylsulfonylamino, Isopropylsulfonylamino, Butylsulfonylamino, Mono- oder Dimethylaminosulfonylamino, Mono- oder Diethylaminosulfonylamino, Mono- oder Dipropylaminosulfonylamino, Mono- oder Diisopropylaminosulfonylamino, Mono- oder Dibutylaminosulfonylamino oder (N-Methyl-N-ethylaminosulfonyl)amino.

Reste $R^9$, sind weiterhin, wie auch Reste $R^8$, z.B. Fluor, Chlor oder Brom.

Reste $R^9$ sind weiterhin z.B. Phenyl, 2-Methylphenyl, 2,4-Dimethylphenyl, 2-Methoxyphenyl, 2,4-Dimethoxyphenyl, Benzyl, 2-Methylbenzyl, 2,4-Dimethylbenzyl, 2-Methoxybenzyl, 2,4-Dimethoxybenzyl, Methylamino, Ethylamino, Propylamino, Isopropylamino, Butylamino, Pentylamino, Hexylamino, Heptylamino, Octylamino oder 2-Ethylhexylamino.

Reste $R^6$ und $R^7$ sind weiterhin z.B. Allyl oder Methallyl.

Wenn $R^2$ und $R^3$ oder $R^6$ und $R^7$ zusammen mit dem sie verbindenden Stickstoffatom einen fünf- oder sechsgliedrigen gesättigten heterocyclischen Rest, der gegebenenfalls weitere Heteroatome aufweist, bedeuten, so können dafür z.B. Pyrrolidinyl, Piperidinyl, Morpholinyl, Piperazinyl oder N-($C_1$-$C_4$-Alkyl)piperazinyl in Betracht kommen.

Besonders bevorzugt sind Farbstoffe der Formel I, in der Z einen Rest der Formel IIa, IIc, III, IIm, IIn, IIo oder IIp bedeutet, wobei ein Rest der Formel IIc oder III besonders zu nennen ist.

Besonders hervorzuheben sind Farbstoffe der Formel IIIa

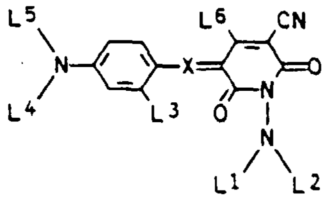

(IIIa),

in der

| | |
|---|---|
| X | CH oder Stickstoff, |
| $L^1$ und $L^2$ | unabhängig voneinander jeweils Wasserstoff, $C_1$-$C_8$-Alkyl, Phenyl, Tolyl, $C_1$-$C_8$-Alkylcarbonyl, $C_1$-$C_8$-Alkylsulfonyl, Phenylsulfonyl, Tolylsulfonyl, Pyridylsulfonyl, Benzoyl, Methylbenzoyl Pyridylcarbonyl oder Thienylcarbonyl, |
| $L^3$ | Wasserstoff, Methyl, Methoxy oder den Rest -$NHCOR^{10}$ oder -$NHCO_2R^{10}$, worin $R^{10}$ für Phenyl, Benzyl, Tolyl oder $C_1$-$C_8$-Alkyl, das gegebenenfalls durch ein oder zwei Sauerstoffatome in Etherfunktion unterbrochen ist, steht, |
| $L^4$ und $L^5$ | unabhängig voneinander Wasserstoff, $C_1$-$C_8$-Alkyl, 2-Cyanoethyl, Benzyl, $C_1$-$C_4$-Alkanoyloxy-$C_1$-$C_4$-alkyl, $C_1$-$C_4$-Alkoxycarbonyl-$C_1$-$C_4$-alkyl oder $C_1$-$C_4$-Alkoxycarbonyloxy-$C_1$-$C_4$-alkyl und |
| $L^6$ | Methyl bedeuten. |

Besonders hervorzuheben sind weiterhin Farbstoffe der Formel IIIb

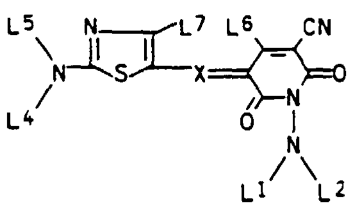

(IIIb),

in der X CH oder Stickstoff, $L^7$ $C_1$-$C_6$-Alkyl, Phenyl, Tolyl, Benzyl, Cyclohexyl oder Thienyl bedeutet und $L^1$, $L^2$, $L^4$, $L^5$ und $L^6$ jeweils die unter Formel IIIa genannte Bedeutung besitzen.

Ganz besonders hervorzuheben sind Farbstoffe der Formel IIIa, in der $L^1$ und $L^2$ unabhängig voneinander jeweils $C_1$-$C_8$-Alkylcarbonyl, Benzoyl, Methylbenzoyl oder Thienylcarbonyl bedeuten.

Ganz besonders hervorzuheben sind weiterhin Farbstoffe der Formel IIIb, in der X CH bedeutet.

Die erfindungsgemäßen Pyridonfarbstoffe der Formel I können nach an sich bekannten Methoden hergestellt werden.

Beispielsweise kann man Formyl- (X=CH) oder Nitrosoverbindungen (X=N) der Formel IV

$$Z\text{-}X{=}O \qquad (IV),$$

in der Z die obengenannte Bedeutung besitzt, mit einem Pyridon der Formel V

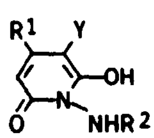

(V),

in der $R^1$, $R^2$ und Y jeweils die obengenannte Bedeutung besitzen, in einem inerten Lösungsmittel in Gegenwart eines Katalysators kondensieren.

Geeignete inerte Lösungsmittel sind beispielsweise Toluol, Chlorbenzol, Nitrobenzol, Benzoesäuremethyl- oder -ethylester, Methylenchlorid, Chloroform, Tetrachlorkohlenstoff, 1,1-Dichlorethan, 1,2-Dichlorethan, 1,1,1-Trichlorethan, Isobutanol, Essigsäure, Propionsäure, Xylol, Benzol oder Dichlorbenzol.

Geeignete Katalysatoren sind z.B. p-Toluolsulfonsäure, Schwefelsäure, Acetanhydrid, Propionsäureanhydrid, Benzoesäureanhydrid oder N,N'-Dicyclohexylcarbodiimid. Die Katalysatoren können dabei in einer Menge von 1 bis 50, vorzugsweise 1 bis 10 Moläquivalent, jeweils bezogen auf ein Moläquivalent an Pyridon V angewandt werden.

Die resultierenden Farbstoffe der Formel Ia

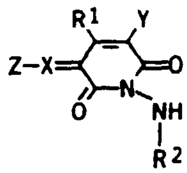

(Ia),

in der $R^1$, $R^2$, X, Y und Z jeweils die obengenannte Bedeutung besitzen, lassen sich z.B. durch Acylierung mit einem Carbonsäureanhydrid der Formel VI oder einer Verbindung der Formel VII

$$R^{11}\text{-CO-O-CO-}R^{11} \quad (VI),$$

$$R^{11}\text{-CO-}R^{12} \quad (VII),$$

wobei $R^{11}$ $C_1$-$C_{11}$-Alkyl, gegebenenfalls substituiertes Phenyl oder Thienyl und $R^{12}$ eine Austrittsgruppe, z.B. Chlor, Brom, Methylsulfonat, Trifluormethylsulfonat oder o- oder p-Toluolsulfonat, bedeuten, in einem inerten Lösungsmittel und gegebenenfalls in Anwesenheit einer Base in die Pyridonfarbstoffe der Formel I überführen.

Geeignete Basen sind z.B. Amine, wie Triethylamin, Tributylamin, Pyridin, p-Dimethylaminopyridin, Alkalihydrogencarbonate wie Natrium- oder Kaliumhydrogencarbonat, Alkalicarbonate, wie Natrium- oder Kaliumcarbonat oder Alkalisalze von niederen Carbonsäuren, wie Natrium- oder Kaliumacetat oder Natrium- oder Kaliumpropionat. Je Moläquivalent Farbstoff Ia kommen in der Regel 1 bis 50, vorzugsweise 1 bis 10 Moläquivalent an Base zur Anwendung.

Es ist aber auch möglich, die Farbstoffe der Formel I durch Umsetzung der Verbindungen IV mit dem Pyridon V in Gegenwart einer Verbindung der Formel VI oder VII und gegebenenfalls einer Base in einer Eintopfsynthese herzustellen. Als inerte Lösungsmittel und Basen kommen dabei die obengenannten Verbindungen in Betracht.

Es ist auch möglich, Amine der Formel VI

$$Z\text{-}NH_2 \quad (VI),$$

in der Z die obengenannte Bedeutung besitzt, mit Pyridonen der Formel V oxidativ zu kuppeln (siehe z.B. US-A-4 695 287).

Eine weitere Aufgabe der vorliegenden Erfindung war es, ein neues Verfahren für den thermischen Transfer von Farbstoffen bereitzustellen.

Beim Thermotransferdruckverfahren wird ein Transferblatt, das einen thermisch transferierbaren Farbstoff in einem oder mehreren Bindemitteln, gegebenenfalls zusammen mit geeigneten Hilfsmitteln, auf einem Träger enthält, mit einer Energiequelle, z.B. mit einem Heizkopf oder einem Laser, durch kurze Heizimpulse (Dauer: Bruchteile einer Sekunde) von der Rückseite her erhitzt, wodurch der Farbstoff aus dem Transferblatt migriert und in die Oberflächenbeschichtung eines Aufnahmemediums hineindiffundiert. Der wesentliche Vorteil dieses Verfahrens besteht darin, daß die Steuerung der zu übertragenden Farbstoffmenge (und damit die Farbabstufung) durch Einstellung der von der Energiequelle abzugebenden Energie leicht möglich ist.

Allgemein wird die Farbaufzeichnung unter Verwendung der drei subtraktiven Grundfarben Gelb, Magenta, Cyan (und gegebenenfalls Schwarz) durchgeführt.

Um eine optimale Farbaufzeichnung zu ermöglichen, müssen die Farbstoffe folgende Eigenschaften besitzen:

- leichte thermische Transferierbarkeit,
- geringe Migration innerhalb oder aus der Oberflächenbeschichtung des Aufnahmemediums bei Raumtemperatur,
- hohe thermische und photochemische Stabilität sowie Resistenz gegen Feuchtigkeit und chemische Stoffe,
- für subtraktive Farbmischung die geeigneten Farbtöne aufweisen,
- einen hohen molaren Absorptionskoeffizienten aufweisen,
- bei Lagerung des Transferblattes nicht auskristallisieren.

Diese Forderungen sind erfahrüngsgemäß gleichzeitig sehr schwierig zu erfüllen.

Daher entsprechen die meisten der bekannten, für den thermischen Transferdruck verwendeten Farbstoffe nicht dem geforderten Anforderungsprofil.

Es wurde nun gefunden, daß die übertragung von Pyridonfarbstoffen von einem Träger auf ein mit Kunststoff beschichtetes Papier mit Hilfe einer Energiequelle vorteilhaft gelingt, wenn man einen Träger verwendet, auf dem sich ein oder mehrere Farbstoffe der obengenannten Formel I befinden.

Im Vergleich zu den bei den bekannten Verfahren verwendeten Farbstoffen zeichnen sich die im erfindungsgemäßen Verfahren übertragenen Farbstoffe der Formel I im allgemeinen durch verbesserte Migrationseigenschaften im Aufnahmemedium bei Raumtemperatur, leichtere thermische Transferierbarkeit, höhere thermische und photochemische Stabilität, leichtere technische Zugänglichkeit, bessere Resistenz gegen Feuchtigkeit und chemische Stoffe, höhere Farbstärke, bessere Löslichkeit oder bessere Eignung für die subtraktive Farbmischung (höhere Farbtonreinheit, günstigere Form der Absorptionsbande) aus.

Zur Herstellung der für das erfindungsgemäße Verfahren benötigten Farbstoffträger werden die Farbstoffe in einem geeigneten organischen Lösungsmittel oder in Mischungen von Lösungsmitteln mit einem oder mehreren Bindemitteln, gegebenenfalls unter Zugabe von Hilfsmitteln, zu einer Druckfarbe verarbeitet. Diese enthält den Farbstoff vorzugsweise in molekular-dispers gelöster Form. Die Druckfarbe kann mittels einer Rakel auf den inerten Träger aufgetragen und die Färbung an der Luft getrocknet werden.

Geeignete organische Lösungsmittel für die Farbstoffe I sind z.B. solche, in denen die Löslichkeit der Farbstoffe I bei einer Temperatur von 20°C größer als 1 Gew.-%, vorzugsweise größer als 5 Gew.-% ist.

Beispielhaft seien Ethanol, Propanol, Isobutanol, Tetrahydrofuran, Methylenchlorid, Methylethylketon, Cyclopentanon, Cyclohexanon, Toluol, Chlorbenzol oder deren Mischungen genannt.

Als Bindemittel kommen alle Resins oder Polymermaterialien in Betracht, die in organischen Lösungsmitteln löslich sind und den Farbstoff an den inerten Träger abriebfest zu binden vermögen. Dabei werden solche Bindemittel bevorzugt, die den Farbstoff nach Trocknung der Druckfarbe an der Luft in Form eines klaren, transparenten Films aufnehmen, ohne daß dabei eine sichtbare Auskristallisation des Farbstoffes auftritt.

Solche Bindemittel sind beispielsweise in der EP-A-441 282 oder in den entsprechenden dort zitierten Patentanmeldungen genannt. Darüber hinaus sind gesättigte lineare Polyester zu nennen.

Bevorzugte Bindemittel sind Ethylcellulose, Ethylhydroxyethylcellulose, Polyvinylbutyrat, Polyvinylacetat, Cellulosepropionat oder gesättigte lineare Polyester.

Das Gewichtsverhältnis Bindemittel:Farbstoff beträgt im allgemeinen 1:1 bis 10:1.

Als Hilfsmittel kommen z.B. Trennmittel in Betracht, wie sie in der EP-A-441 282 oder den entsprechenden dort zitierten Patentanmeldungen genannt sind. Darüber hinaus sind besonders organische Additive zu nennen, welche das Auskristallisieren der Transferfarbstoffe bei Lagerung oder beim Erhitzen des Farbbandes verhindern, z.B. Cholesterin oder Vanillin.

Geeignete inerte Träger sind z.B. in der EP-A-441 282 oder in den entsprechenden dort zitierten Patentanmeldungen beschrieben. Die Dicke des Farbstoff-Trägers beträgt im allgemeinen 3 bis 30 µm, vorzugsweise 5 bis 10 µm.

Als Farbstoffnehmerschicht kommen prinzipiell alle temperaturstabilen Kunststoffschichten mit Affinität zu den zu transferierenden Farbstoffen in Betracht, z.B. modifizierte Polycarbonate oder Polyester. Weitere Einzelheiten dazu können z.B. aus der EP-A-441 282 oder den entsprechenden dort zitierten Patentanmeldungen entnommen werden.

Die übertragung erfolgt mittels einer Energiequelle, z.B. mittels eines Lasers oder eines Thermokopfes, wobei letzterer auf eine Temperatur von ≥ 300°C aufheizbar sein muß, damit der Farbstofftransfer im Zeitbereich t: $0 < t < 15$ msec erfolgen kann. Dabei migriert der Farbstoff aus dem Transferblatt und diffundiert in die Oberflächenbeschichtung des Aufnahmemediums.

Besonders geeignet sind auch Mischungen der neuen Farbstoffe I untereinander.

Die erfindungsgemäßen Farbstoffe eignen sich weiterhin vorteilhaft zum Färben von synthetischen Materialien, z.B. von Polyestern, Polyamiden oder Polycarbonaten. Insbesondere zu nennen sind textile Gewebe aus Polyester

oder Polyamid oder Polyester-Baumwolle-Mischgewebe.

Die neuen Farbstoffe eignen sich weiterhin vorteilhaft für die Herstellung von Farbfiltern, wie sie z.B. in der EP-A-399 473 beschrieben sind.

schließlich können sie auch vorteilhaft als Farbmittel für die Herstellung von Tonern für die Elektrophotographie verwendet werden.

Die folgenden Beispiele sollen die Erfindung näher erläutern.

Herstellung der Farbstoffe

Beispiel 1

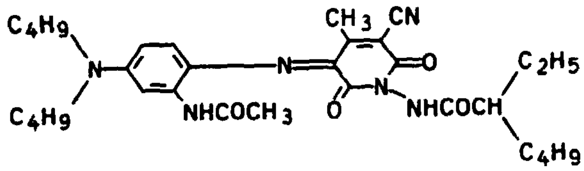

13,1 g 3-Acetylamino-N,N-dibutylanilin wurden in wäßrig-salzsaurem Milieu mit Natriumnitrit nitrosiert. Nach Zugabe von 20 gew.%igem Ammoniakwasser bis zu einem pH-Wert von 8 wurde die Verbindung der Formel

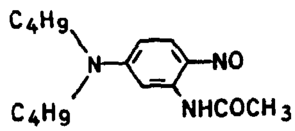

in Methylenchlorid aufgenommen. Die organische Phase wurde im Scheidetrichter abgetrennt und mit einer Lösung von 15,5 g des Pyridons

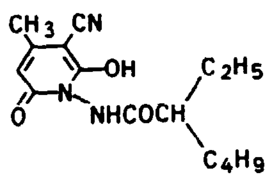

in 30 ml Acetanhydrid vereinigt.

Nach dem Abdestillieren von Methylenchlorid wurde kurz auf 90°C erhitzt und dann auf Raumtemperatur abgekühlt. Anschliepend wurden 100 ml Isopropanol und 50 ml Methanol zugegeben und der Farbstoff durch Zugabe von ca. 5 ml Wasser ausgefällt. Nach Absaugen und gründlichem Nachwaschen mit Methanol wurden 18,1 g (64 % d.Th.) des obigen Farbstoffs in spektral reiner Form erhalten.

Fp = 170 bis 174°C

$\lambda_{max}$ (Tetrahydrofuran): 590 nm

(Methylenchlorid): 598 nm.

Beispiel 2

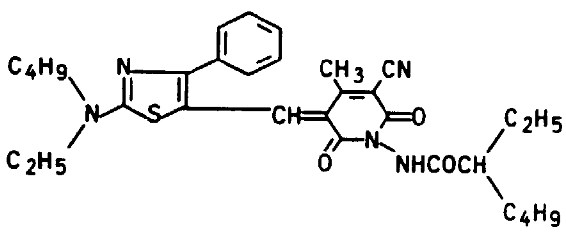

15,5 g des in Beispiel 1 beschriebenen Pyridons wurden mit 15,1 g 2-(N-Butyl-N-ethylamino)-4-phenyl-5-formylthiazol, 0,5 g β-Alanin sowie 2,0 g p-Toluolsulfonsäure in 65 ml Essigester 3,5 Stunden bei Raumtemperatur gerührt. Anschließend wurde 30 Minuten auf 50°C erhitzt. Nach Abkühlen auf Raumtemperatur wurde der Farbstoff abgesaugt, mit wenig Methanol und Wasser neutral gewaschen und bei 95°C unter vermindertem Druck getrocknet. Die Ausbeute an spektral reinem Produkt betrug 17,6 g (63 % d. Th.).
Fp = 141°C
$\lambda_{max}$ (Tetrahydrofuran): 532 nm
(Methylenchlorid): 537 nm.

In analoger Weise werden die in den folgenden Tabellen 1 bis 3 aufgeführten Farbstoffe erhalten. Die unter dem Substituent R3 genannten Bezeichnungen beziehen sich dabei auf die Bezeichnungen der Formeln in der Beschreibung.

Tabelle 1

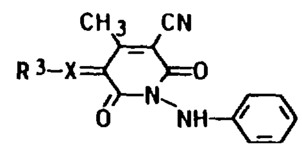

| Bsp.Nr. | $R^3$ | X | $R^4$ | $R^5$ | $R^6$ | $R^7$ | $R^9$ | $\lambda_{max}$ [nm] in $CH_2Cl_2$ |
|---|---|---|---|---|---|---|---|---|
| 3 | IIl | CH | - | - | $C_2H_5$ | $C_4H_9$ | $C_6H_5$ | 537 |
| 4 | IIl | CH | - | - | $C_2H_5$ | $C_6H_{13}$ | $CH(CH_3)_2$ | 524 |
| 5 | IIa | N | $NHCOCH_3$ | H | $C_4H_9$ | $C_4H_9$ | - | 599 |
| 6 | IIp | CH | - | - | $CH_3$ | - | - | 521 |
| 7 | IIl | CH | - | - | $CH_3$ | $C_6H_{11}$ | $C_6H_5$ | 537 |
| 8 | IIl | CH | - | - | $C_2H_5$ | $C_2H_5$ | $CH(CH_3)_2$ | 524 |
| 9 | IIp | CH | - | - | $CH_3$ | - | - | 521 |

Tabelle 2

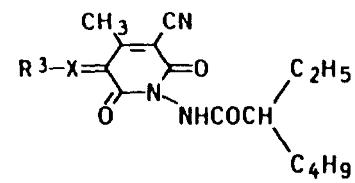

| Bsp.Nr. | $R^3$ | X | $R^4$ | $R^5$ | $R^6$ | $R^7$ | $R^9$ | $\lambda_{max}$ [nm] in $CH_2Cl_2$ |
|---|---|---|---|---|---|---|---|---|
| 10 | IIl | CH | - | - | $CH(CH_3)_2$ | $CH(CH_3)_2$ | $C_6H_5$ | 538 |
| 11 | IIp | CH | - | - | $CH_3$ | - | - | 522 |
| 12 | IIc | CH | H | $CH_3$ | $CH_3$ | - | - | 534 |
| 13 | IIa | CH | H | H | $C_2H_4-C_6H_5$ | $C_2H_4CN$ | - | 537 |
| 14 | IIl | CH | - | - | $C_6H_{11}$ | $C_6H_{11}$ | $C_6H_5$ | 542 |
| 15 | IIp | CH | - | - | $CH_3$ | - | - | 522 |
| 16 | IIo | CH | - | - | - | - | H | 514 |
| 17 | IIl | N | - | - | $C_2H_5$ | $C_2H_5$ | $C_6H_5$ | 586 |
| 18 | IIc | N | H | H | $C_2H_5$ | - | - | 599 |

Tabelle 3

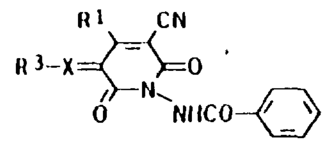

| Bsp.Nr. | $R^1$ | $R^3$ | X | $R^4$ | $R^5$ | $R^6$ | $R^7$ | $R^8$ | $R^9$ | $\lambda_{max}$ [nm] in $CH_2Cl_2$ |
|---|---|---|---|---|---|---|---|---|---|---|
| 19 | $CH_3$ | IIl | N | - | - | $CH(CH_3)_2$ | $CH(CH_3)_2$ | - | $C_6H_5$ | 587 |
| 20 | $CH_3$ | IIl | CH | - | - | $C_6H_{11}$ | $CH_3$ | - | $C_6H_5$ | 535 |
| 21 | $CH_3$ | IIl | CH | - | - | $CH(CH_3)_2$ | $CH(CH_3)_2$ | - | $C_6H_5$ | 538 |
| 22 | $CH_3$ | IIc | CH | H | $CH_3$ | $CH_3$ | - | - | - | 536 |
| 23 | $CH_3$ | IIl | CH | - | - | $C_4H_9$ | $C_4H_9$ | - | $C_6H_5$ | 537 |
| 24 | $CH_3$ | IIl | CH | - | - | $C_2H_5$ | $C_2H_5$ | - | $C_6H_5$ | 534 |
| 25 | $CH_3$ | IIl | CH | - | - | $C_6H_{11}$ | $C_2H_5$ | - | $C_6H_5$ | 540 |
| 26 | $CH_3$ | IIl | CH | - | - | $C_6H_{11}$ | $C_6H_{11}$ | - | $C_6H_5$ | 541 |
| 27 | $CH_3$ | IIa | N | $NHCOCH_3$ | H | $C_2H_5$ | $C_2H_5$ | - | - | 595 |
| 28 | $CH_3$ | IIl | CH | - | - | $C_2H_5$ | $C_4H_9$ | - | $C_6H_5$ | 537 |
| 29 | $CH_3$ | IIl | CH | - | - | $C_2H_5$ | $C_2H_5$ | - | $CH(CH_3)_2$ | 524 |
| 30 | $CH_3$ | IIc | CH | H | H | $C_2H_4CO_2C_2H_5$ | - | - | - | 541 |
| 31 | $CH_3$ | IIa | N | $CH_3$ | H | $C_4H_9$ | $C_4H_9$ | - | - | 678 |
| 32 | $CH_3$ | IIj | CH | - | - | $C_2H_4$-O-$C_2H_4$*) | | Cl | - | 557 |
| 33 | $CH_3$ | IIj | CH | - | - | $C_4H_8$**) | | P-$CH_3$-$C_6H_4$ | - | 544 |
| 34 | $CH_3$ | IIl | CH | - | - | $C_3H_7$ | $C_3H_7$ | - | P-$CH_3O$-$C_6H_4$ | 534 |

*) n = 1
**) n = 0

Tabelle 4

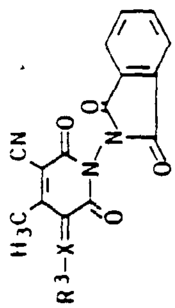

| Bsp.Nr. | $R^3$ | X | $R^4$ | $R^5$ | $R^6$ | $R^7$ | $R^9$ | $\lambda_{max}$ [nm] in $CH_2Cl_2$ |
|---|---|---|---|---|---|---|---|---|
| 35 | III | CH | - | - | $C_4H_9$ | $C_4H_9$ | $C_6H_5$ | 537 |
| 36 | IIa | N | $CH_3$ | H | $C_2H_5$ | $C_4H_9$ | - | 713 |
| 37 | IIa | N | $NHCOCH_3$ | H | $C_2H_5$ | $C_2H_5$ | - | 593 |

Die folgenden Beispiele sollen die Erfindung näher erläutern.

Herstellung der Farbstoffe

Beispiel 38

a)

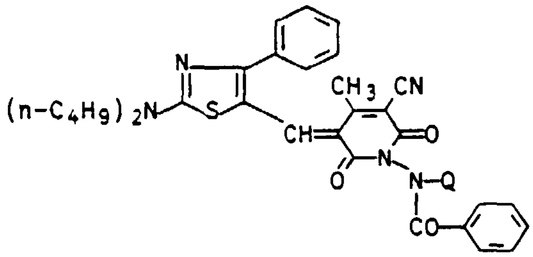

349,7 g 1-Benzoylamino-2-hydroxy-4-methyl-5-cyanopyrid-6-on wurden in 1,5 1 Toluol und 13 g p-Toluolsulfonsäure suspendiert. Bei 70°C wurden 529,3 g 78 gew.-%iges 2-(Di-n-butylamino)-4-phenyl-5-formylthiazol zugetropft. Das Reaktionsgemisch wurde 6 Stunden am Wasserabscheider unter Rückfluß gekocht. Nach Abdestillieren von 1 l Toluol wurde auf Raumtemperatur abgekühlt. Der Niederschlag wurde abgesaugt und unter vermindertem Druck bei 50°C getrocknet. Man erhielt 692,3 g (94 % d. Th.) der obengenannten verbindung (Q=H), die einen Schmelzpunkt von 236°C aufweist.
(Mit Isobutanol als Lösungsmittel erhielt man die Verbindung in 76 % Ausbeute.)

b) 567 g der unter a) beschriebenen Verbindung wurden in 800 ml Acetanhydrid suspendiert und 2 Stunden zum Sieden erhitzt. Die resultierende Lösung wurde auf 60°C abgekühlt, wobei ein Niederschlag ausfiel, und dann mit 450 ml Methanol verdünnt. Der Niederschlag wurde abgesaugt und mit Methanol und Wasser nachgewaschen. Nach Trocknen unter vermindertem Druck bei 50°C erhielt man 458,3 g (75 % d. Th.) der obengenannten Verbindung (Q=$COCH_3$), die einen Schmelzpunkt von 193°C aufweist.
($\lambda_{max}$ = gemessen in $CH_2Cl_2$: 537 nm)

In analoger Weise werden die in der folgenden Tabelle 5 aufgeführten Farbstoffe hergestellt:

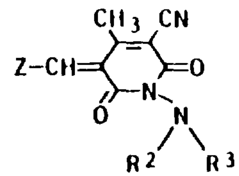

| Bsp. Nr. | Z | $R^2$ | $R^3$ | $\lambda_{max}$ (in $CH_2Cl_2$) oder Fp. |
|---|---|---|---|---|
| 39 | 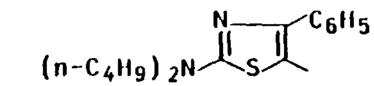 | $COC_6H_5$ | $COC_2H_5$ | 224°C |
| 40 | 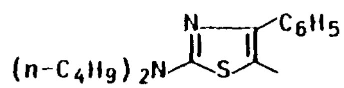 | $COC_6H_5$ | $COC_6H_5$ | 130-134°C |
| 41 | 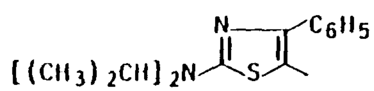 | $COCH_3$ | 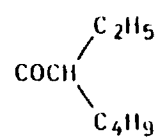 | 539 nm |
| 42 | 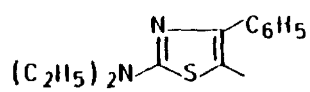 | $COC_6H_5$ | $COCH_3$ | 537 nm |

Tabelle 5 (Fortsetzung)

| Bsp. Nr. | Z | $R^2$ | $R^3$ | $\lambda_{max}$ (in $CH_2Cl_2$) oder Fp. |
|---|---|---|---|---|
| 43 | 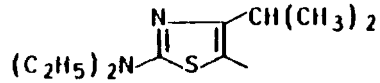 | $COC_6H_5$ | $COCH_3$ | 524 nm |
| 44 | 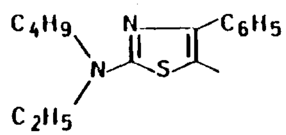 | $COCH_3$ | 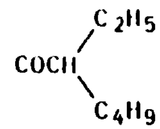 | 537 nm |
| 45 | 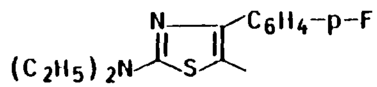 | $COC_6H_5$ | $COCH_3$ | 536 nm |
| 46 | 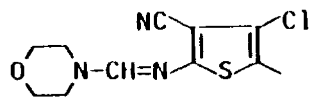 | $COC_6H_5$ | $COCH_3$ | 565 nm* |
| 47 | 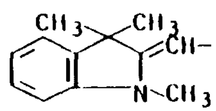 | $COCH_3$ | 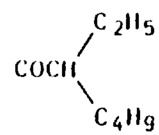 | 521 nm |

* gemessen in Tetrahydrofuran

Tabelle 5 (Fortsetzung)

| Bsp. Nr. | Z | R2 | R3 | $\lambda_{max}$ (in $CH_2Cl_2$) oder Fp. |
|---|---|---|---|---|
| 48 | 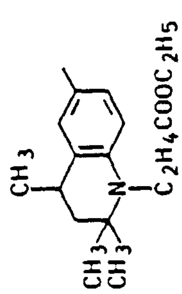 | $COC_6H_5$ | $COCH_3$ | 549 nm |

Beispiel 49

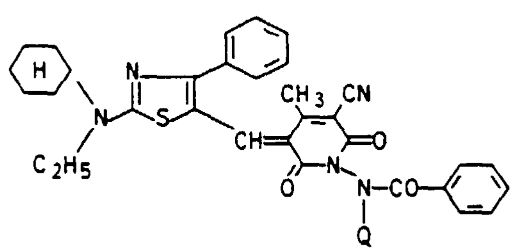

65 g 2-(N-Ethyl-N-cyclohexylamino)-4-phenyl-5-formylthiazol und 53,8 g 1-Benzoylamino-2-hydroxy-4-methyl-5-cyanopyrid-6-on wurden in 200 ml Acetanhydrid gegeben, unter Rühren innerhalb von 15 Minuten auf Rückflußtemperatur

(136°C) erhitzt und 15 Minuten bei dieser Temperatur gehalten. Danach ließ man auf 28°C abkühlen und saugte den gebildeten Niederschlag ab. Man wusch portionsweise mit 350 ml Methanol und anschließend mit 1000 ml Wasser. Die Trocknung erfolgte unter vermindertem Druck bei einer Temperatur von 75°C.

Man erhielt 103 g spektral reiner Magentamischung mit einem Schmelzpunkt von 258°C, die gemäß HPLC folgende Zusammensetzung aufwies:

$Q = COCH_3$ 66 %

$Q = H$ 33 %

$\lambda_{max}$ (in Methylenchlorid): 538 nm.

Beispiel 50

Beispiel 50 wurde analog Beispiel 49 durchgeführt, jedoch setzte man das Erhitzen auf Rückflußtemperatur für 4 Stunden fort. Man erreichte so eine völlige Acetylierung ($Q = COCH_3$). $\lambda_{max}$ (in Methylenchlorid): 540 nm

In analoger Weise erhält man die in der folgenden Tabelle 6 aufgeführten Farbstoffe der Formel

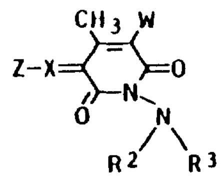

| Bsp. Nr. | Z | X | $R^2$ | $R^3$ | W | $\lambda_{max}$ (in $CH_2Cl_2$) oder Fp. |
|---|---|---|---|---|---|---|
| 51 | 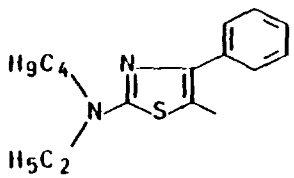 | CH | $COCH_3$ | $COC_6H_5$ | CN | 536 |
| 52 | 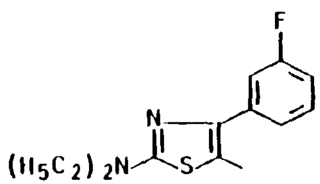 | CH | $COCH_3$ | $COCH_3$ | CN | 536 |
| 53 | 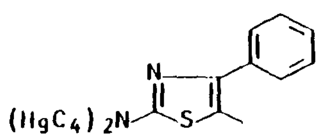 | N | $COCH_3$ | $COC_6H_5$ | CN | 586 |

Tabelle 6 (Fortsetzung)

| Bsp. Nr. | Z | X | $R^2$ | $R^3$ | W | $\lambda_{max}$ (in $CH_2Cl_2$) oder Fp. |
|---|---|---|---|---|---|---|
| 54 | 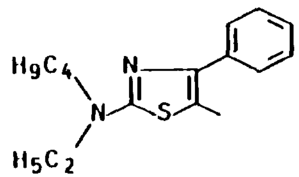 | CH | $COC_2H_5$ | $COC_6H_5$ | CN | 537 |
| 55 | 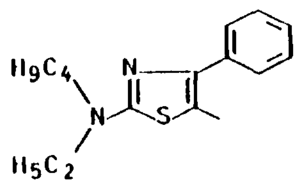 | CH | $COC_3H_7$ | $COC_6H_5$ | CN | 537 |
| 56 | 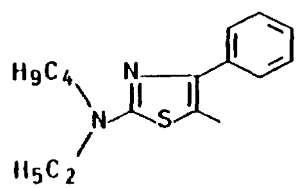 | CH | $COCH(CH_3)_2$ | $COC_6H_5$ | CN | 537 |
| 57 | 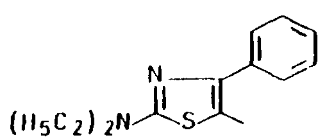 | CH | $COCH(CH_3)_2$ | $COC_6H_5$ | CN | 534 |

Tabelle 6 (Fortsetzung)

| Bsp. Nr. | Z | X | $R^2$ | $R^3$ | W | $\lambda_{max}$ (in $CH_2Cl_2$) oder Fp. |
|---|---|---|---|---|---|---|
| 58 | 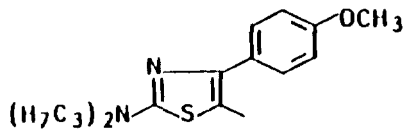 | CH | $COCH_3$ | $COC_6H_5$ | CN | 539 |
| 59 | 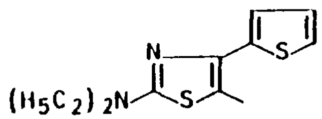 | CH | $COCH_3$ | $COC_6H_5$ | CN | 555 |
| 60 | 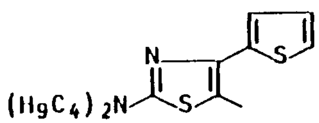 | CH | $COCH_3$ | $COC_6H_5$ | CN | 556 |
| 61 | 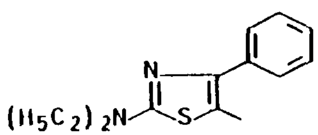 | CH | $COC_6H_5$ | $COC_6H_5$ | CN | 537 |

Tabelle 6 (Fortsetzung)

| Bsp. Nr. | Z | X | $R^2$ | $R^3$ | W | $\lambda_{max}$ (in $CH_2Cl_2$) oder Fp. |
|---|---|---|---|---|---|---|
| 62 | 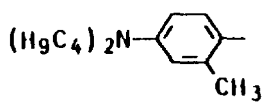 | N | $COCH_3$ | $COC_6H_5$ | CN | 682 |
| 63 | 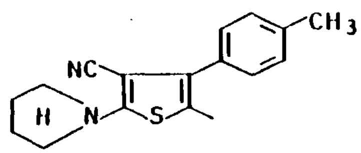 | CH | $COCH_3$ | $COC_6H_5$ | CN | 547 |
| 64 | 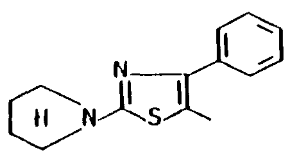 | CH | $COCH_3$ | $COC_6H_5$ | CN | 534 |
| 65 | 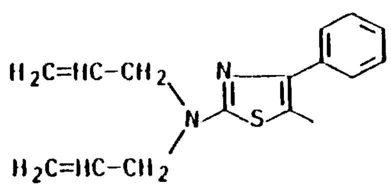 | CH | $COCH_3$ | $COC_6H_5$ | CN | 534 |

Tabelle 6 (Fortsetzung)

| Bsp. Nr. | Z | X | $R^2$ | $R^3$ | W | $\lambda_{max}$ (in $CH_2Cl_2$) oder Fp. |
|---|---|---|---|---|---|---|
| 66 | 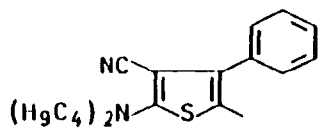 | CH | $COCH_3$ | $COC_6H_5$ | CN | 549 |
| 67 | 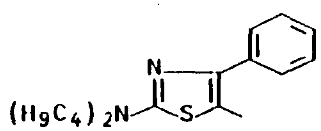 | CH | $COCH_3$ | $COCH_3$ | CN | 537 |
| 68 | 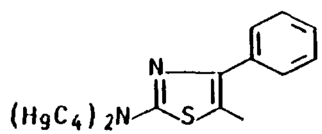 | CH | $COC_6H_5$ | $COCH_3$ | $CO_2CH_3$ | 518 |
| 69 | 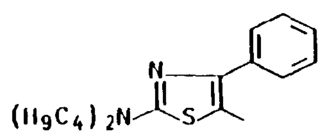 | CH | $COC_6H_5$ | $COCH_3$ | $COCH_3$ | 530 |

Übertragung von Farbstoffen (Anwendung)

I.

Um das Transferverhalten der Farbstoffe quantitativ und in einfacher Weise prüfen zu können, wurde der Thermotransfer mit großflächigen Heizbacken durchgeführt, wobei die Transfertemperatur im Bereich $50°C < T < 120°C$ variiert und die Transferzeit auf 2 Minuten festgelegt wurde.

α) Allgemeines Rezept für die Beschichtung der Träger mit Farbstoff:
1 g Bindemittel wurde in 8 ml Toluol/Ethanol (8:2 v/v) bei 40 bis 50°C gelöst. Dazu wurde eine Lösung aus 0,25 g Farbstoff in 5 ml Tetrahydrofuran eingerührt und gegebenenfalls von unlöslichem Rückstand abfiltriert. Die so erhaltene Druckpaste wurde mit einer 80 µm Rakel auf eine Polyesterfolie (Dicke: 6 bis 10 µm) abgezogen und mit einem Fön getrocknet.

β) Prüfung auf thermische Transferierbarkeit
Die verwendeten Farbstoffe wurden in der folgenden Weise geprüft:

Die den zu prüfenden Farbstoff in der Beschichtungsmasse (Vorderseite) enthaltende Polyesterfolie (Geber) wurde mit der Vorderseite auf kommerziell erhältliches (unten näher bezeichnetes) Papier (Nehmer) gelegt und aufgedrückt. Geber/Nehmer wurden dann mit Aluminiumfolie umwickelt und zwischen zwei beheizten Platten bei verschiedener Temperatur T (im Temperaturintervall $50°C < T < 120°C$) erhitzt. Die in die glänzende Kunststoffschicht des Nehmers diffundierte Farbstoffmenge ist proportional der optischen Dichte (= Extinktion A). Letztere wurde photometrisch bestimmt. Trägt man den Logarithmus der im Temperaturintervall zwischen 50 und 120°C gemessenen Extinktion A der angefärbten Nehmerpapiere gegen die zugehörige reziproke absolute Temperatur auf, so erhält man Geraden, aus deren Steigung die Aktivierungsenergie $\Delta E_T$ für das Transferexperiment berechnet wird:

$$\Delta E_T = 2,3 \cdot R \cdot \frac{\Delta \log A}{\Delta \left[\frac{1}{T}\right]}$$

Zur vollständigen Charakterisierung wurde aus den Auftragungen zusätzlich die Temperatur T* [°C] entnommen, bei der die Extinktion A der angefärbten Nehmerpapiere den Wert 1 erreicht.

Die in der folgenden Tabelle 7 aufgeführten Farbstoffe wurden nach α) verarbeitet und die erhaltenen, mit Farbstoff beschichteten Träger nach β) auf das Transferverhalten geprüft. In der Tabelle sind jeweils die Thermotransferparameter T* und $\Delta E_T$ aufgeführt.

Als Aufnahmemedium (Nehmer) diente Hitachi Color Video Print Paper der Sorte VY-S. Als Bindemittel wurde Vylon® 290 der Firma Toyobo verwendet.

Tabelle 7

| Bsp.Nr. | Farbstoff aus Bsp.Nr. | T* [°C] | $\Delta E_T$ $\left[\frac{kcal}{mol}\right]$ |
|---|---|---|---|
| 70 | 3 | 92 | 15 |
| 71 | 4 | 82 | 12 |
| 72 | 5 | 78 | 10 |
| 73 | 6 | 69 | 10 |
| 74 | 7 | 90 | 10 |
| 75 | 8 | 70 | 11 |
| 76 | 2 | 85 | 16 |
| 77 | 10 | 68 | 14 |
| 78 | 11 | 63 | 13 |
| 79 | 12 | 77 | 9 |
| 80 | 1 | 73 | 12 |
| 81 | 13 | 91 | 10 |
| 82 | 14 | 82 | 13 |
| 83 | 19 | 67 | 11 |
| 84 | 20 | 54 | 11 |
| 85 | 21 | 62 | 12 |
| 86 | 22 | 77 | 10 |
| 87 | 25 | 72 | 11 |
| 88 | 9 | 69 | 10 |
| 89 | 15 | 63 | 13 |

II.

Allgemeine Vorschrift:

a) 10 g Farbstoff werden, gegebenenfalls unter kurzzeitigem Erwärmen auf 80 bis 90°C, in 100 g einer 10 gew.-%igen Lösung eines Bindemittels (Vylon® 290 der Firma Toyobo) in einem Methylethylketon/Toluol/Cyclohexanon-Gemisch (4,5:2:2 v/v/v) eingerührt.

Die Drucktinte wird mit einer 6 µm Rakel auf eine Polyesterfolie von 6 µm Dicke, auf deren Rückseite eine geeignete Gleitschicht aufgebracht ist, aufgerakelt und mit einem Föhn 1 Minute trockengeblasen. Bevor das Farbband verdruckt werden kann, muß es mindestens 24 Stunden an der Luft nachtrocknen, da Restlösungsmittel den Druckvorgang beeinträchtigen können.

b) Die Farbbänder werden auf einer rechnergesteuerten Versuchsanordnung, die mit einem handelsüblichen Thermokopf ausgestattet ist, auf Hitachi VY-S Videoprintpapier verdruckt.

Durch Veränderung der Spannung wird die Energieabgabe des Thermokopfs gesteuert, wobei die eingestellte Impulsdauer 7 ms beträgt und immer nur ein Impuls abgegeben wird. Die abgegebene Energie liegt zwischen 0,71 und 1,06 mJ/Dot.

Da die Höhe der Anfärbung direkt proportional der zugeführten Energie ist, kann ein Farbkeil erzeugt und spektroskopisch ausgewertet werden.

Aus der graphischen Auftragung der Farbtiefe gegen die zugeführte Energie wird der Q*-Wert (= Energie in

mJ/Dot für den Extinktionswert 1) und die Steigung m in 1/mJ ermittelt.

Die erhaltenen Ergebnisse sind in der folgenden Tabelle 8 aufgeführt, wobei zusätzlich noch die Halbwertsbreite (HWB), gemessen auf Hitachi VY-S Videoprintpapier, und die Massenextinktion (f), gemessen in Methylenchlorid, angegeben sind.

Tabelle 8

| Bsp. Nr. | Farbstoff aus Bsp.Nr. | Q* [mJ/Dot] | m [1/mJ] | HWB [$cm^{-1}$] | f [$\frac{1}{g \cdot cm}$] |
|---|---|---|---|---|---|
| 90 | 38 | 0,87 | 3,30 | 2527 | 190 |
| 91 | 50 | 0,97 | 2,30 | 2462 | 154 |
| 92 | 41 | 0,95 | 2,86 | 2134 | |
| 93 | 42 | 0,94 | 2,48 | 2536 | 161 |
| 94 | 43 | 0,89 | 3,07 | 2343 | 185 |
| 95 | 44 | 0,90 | 2,52 | 2150 | |
| 96 | 45 | 0,95 | 2,63 | 2821 | |
| 97 | 47 | 1,29 | 1,22 | 2358 | |
| 98 | 48 | 1,07 | 2,01 | 3394 | |
| 99 | 49 | 1,03 | 2,21 | 2517 | 164 |
| 100 | 16 | 1,09 | 1,90 | 2490 | |
| 101 | 17 | 1,38 | 1,26 | 2740 | 116 |
| 102 | 18 | 1,34 | 1,49 | 4352 | |
| 103 | 23 | 1,04 | 2,02 | 2608 | 129 |
| 104 | 24 | 1,19 | 1,59 | 2596 | 155 |
| 105 | 26 | 1,70 | 1,35 | 2310 | |
| 106 | 27 | 1,65 | 1,40 | 3765 | |
| 107 | 28 | 1,13 | 1,85 | 2238 | 155 |
| 108 | 29 | 1,18 | 1,48 | 2268 | 246 |
| 109 | 30 | 1,23 | 1,51 | 3842 | 139 |
| 110 | 31 | 1,26 | 1,65 | 4263 | |

Tabelle 8 (Fortsetzung)

| Beispiel Nr. | Farbstoff aus Bsp.Nr. | Q* [mJ/Dot] | m [1/mJ] | HWB [$cm^{-1}$] | f [$\frac{1}{g \cdot cm}$] |
|---|---|---|---|---|---|
| 111 | 32 | 1,75 | 1,23 | | |
| 112 | 33 | 1,49 | 1,16 | 1918 | |
| 113 | 34 | 1,30 | 1,43 | 2678 | |
| 114 | 35 | 1,00 | 2,34 | 2150 | |
| 115 | 36 | 1,01 | 2,22 | 4283 | |
| 116 | 37 | 1,94 | 0,74 | 3300 | |
| 117 | 51 | 0,96 | 2,34 | 2587 | 163 |
| 118 | 52 | 0,93 | 2,86 | 2301 | |
| 119 | 53 | 1,07 | 1,94 | 2210 | 125 |
| 120 | 54 | 1,01 | 2,24 | 2213 | |
| 121 | 55 | 1,04 | 2,19 | 2252 | |
| 122 | 56 | 1,06 | 2,14 | 2552 | |
| 123 | 57 | 1,28 | 1,41 | 2270 | |
| 124 | 58 | 1,06 | 2,02 | 2267 | |
| 125 | 59 | 1,06 | 2,09 | 2630 | |
| 126 | 60 | 1,07 | 1,99 | 2507 | |
| 127 | 61 | 2,48 | 0,53 | 2103 | |
| 128 | 62 | 1,33 | 1,34 | 4630 | |
| 129 | 63 | 1,12 | 2,15 | 1711 | |
| 130 | 64 | 1,12 | 1,91 | 2310 | |
| 131 | 65 | 1,01 | 2,37 | 2261 | |
| 132 | 66 | 1,94 | 0,73 | 1980 | |

Tabelle 8 (Fortsetzung)

| Beispiel Nr. | Farbstoff aus Bsp.Nr. | Q* [mJ/Dot] | m [1/mJ] | HWB [$cm^{-1}$] | f [$\frac{1}{g \cdot cm}$] |
|---|---|---|---|---|---|
| 133 | 65 | 0,91 | 3,08 | 2103 | |
| 134 | 68 | 1,02 | 2,13 | 2981 | |
| 135 | 69 | 1,07 | 1,86 | 2846 | |

**Patentansprüche**

**Patentansprüche für folgende Vertragsstaaten : BE, CH, DE, FR, GB, IT, LI, NL, SE**

**1.** Pyridonfarbstoffe der Formel I

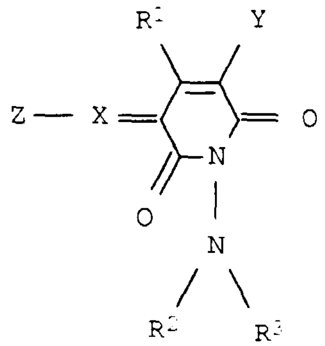

(I),

in der

R[1] $C_1$-$C_4$-Alkyl,

$R^2$ und $R^3$ gleich oder verschieden sind und unabhängig voneinander jeweils Wasserstoff, gegebenenfalls substituiertes $C_1$-$C_{12}$-Alkyl, $C_5$-$C_7$-Cycloalkyl, gegebenenfalls substituiertes Phenyl, gegebenenfalls substituiertes Pyridyl, gegebenenfalls substituiertes $C_1$-$C_{12}$-Alkanoyl, $C_1$-$C_{12}$-Alkoxycarbonyl, gegebenenfalls substituiertes $C_1$-$C_{12}$-Alkylsulfonyl, $C_5$-$C_7$-Cycloalkylsulfonyl, gegebenenfalls substituiertes Phenylsulfonyl, gegebenenfalls substituiertes Pyridylsulfonyl, gegebenenfalls substituiertes Benzoyl, Pyridylcarbonyl oder Thienylcarbonyl oder $R^2$ und $R^3$ zusammen mit dem sie verbindenden Stickstoffatom gegebenenfalls durch $C_1$-$C_4$-Alkyl substituiertes Succinimido, gegebenenfalls durch $C_1$-$C_4$-Alkyl substituiertes Phthalimido oder einen fünf- oder sechsgliedrigen gesättigten heterocyclischen Rest, der gegebenenfalls weitere Heteroatome enthält,

X CH oder Stickstoff,

Y Cyano oder einen Rest der Formel CO-W, CO-OW oder CO-NHW, worin W für Wasserstoff, $C_1$-$C_8$-Alkyl, das gegebenenfalls substituiert ist und durch ein oder zwei Sauerstoffatome in Etherfunktion unterbrochen sein kann, $C_5$-$C_7$-Cycloalkyl, Phenyl oder Tolyl steht, und

Z einen aromatischen carbocyclischen oder heterocyclischen Rest bedeuten.

**2.** Pyridonfarbstoffe nach Anspruch 1, dadurch gekennzeichnet, daß

Z einen Rest der Formel

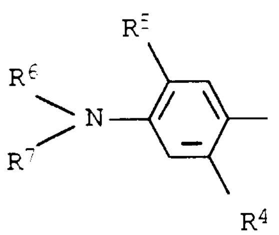

,

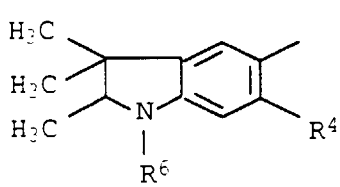

,

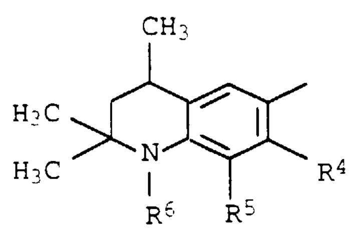

,

(IIa) (IIb) (IIc)

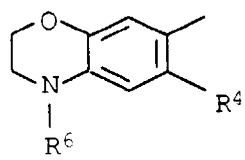 , 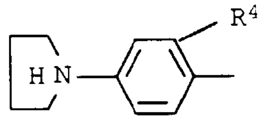 , 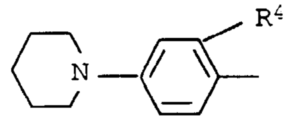 ,

(IId) (IIe) (IIf)

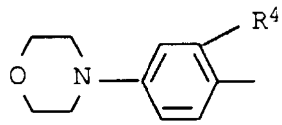 , 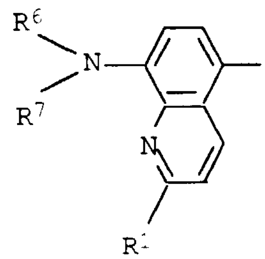 ,

(IIg) (IIh)

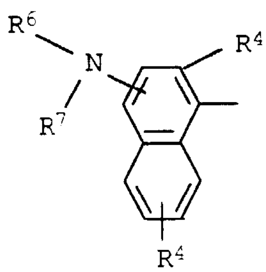 , 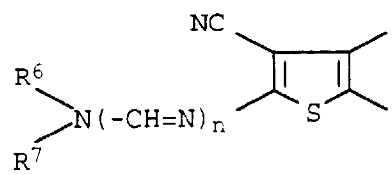 ,

(IIi) (IIj)

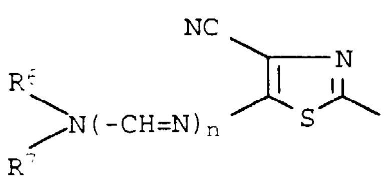 , 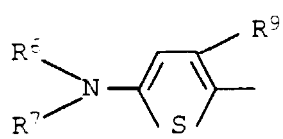 ,

(IIk) (IIl)

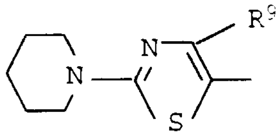 , 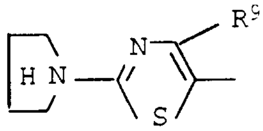 ,

(IIm) (IIn)

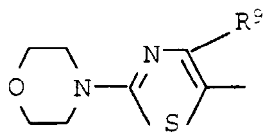

oder

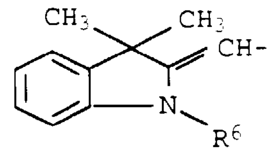

(IIo) (IIp)

bedeutet, worin

n 0 oder 1,

$R^4$ für Wasserstoff, Methyl, Methoxy, $C_1$-$C_4$-Alkylsulfonylamino, $C_1$-$C_4$-Mono- oder -Dialkylaminosulfonylamino oder den Rest -$NHCOR^{10}$ oder -$NHCO_2R^{10}$, wobei $R^{10}$ die Bedeutung von Phenyl, Benzyl, Tolyl oder $C_1$-$C_8$-Alkyl, das gegebenenfalls durch ein oder zwei Sauerstoffatome in Etherfunktion unterbrochen ist, besitzt,

$R^5$ für Wasserstoff, Methyl, Methoxy oder Ethoxy,

$R^6$ und $R^7$ gleich oder verschieden sind und unabhängig voneinander jeweils für Wasserstoff, $C_1$-$C_8$-Alkyl, das gegebenenfalls substituiert ist und durch ein oder zwei Sauerstoffatome in Etherfunktion unterbrochen sein kann, $C_3$-$C_4$-Alkenyl, $C_5$-$C_7$-Cycloalkyl, Phenyl oder Tolyl oder zusammen mit dem sie verbindenden Stickstoffatom für einen fünf- oder sechsgliedrigen gesättigten heterocyclischen Rest, der gegebenenfalls weitere Heteroatome enthält,

$R^8$ Halogen und

$R^9$ für Wasserstoff, Halogen, $C_1$-$C_6$-Alkyl, gegebenenfalls substituiertes Phenyl, gegebenenfalls substituiertes Benzyl, Cyclohexyl, Thienyl, Hydroxy oder $C_1$-$C_8$-Monoalkylamino stehen und

$R^1$ die in Anspruch 1 genannte Bedeutung besitzen.

3. Verfahren zur Übertragung von Pyridonfarbstoffen von einem Träger auf ein mit Kunststoff beschichtetes Papier durch Diffusion oder Sublimation mit Hilfe einer Energiequelle, dadurch gekennzeichnet, daß man einen Träger verwendet, auf dem sich ein oder mehrere Farbstoffe der Formel I gemäß Anspruch 1 befinden.

**Patentansprüche für folgenden Vertragsstaat : ES**

1. Verfahren zur Herstellung von Pyridonfarbstoffen der Formel I

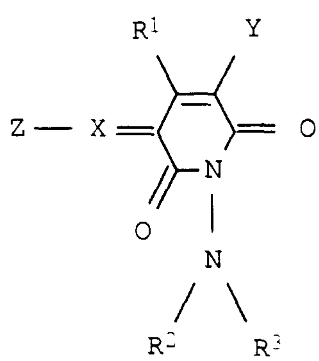

(I),

in der

$R^1$ $C_1$-$C_4$-Alkyl,

$R^2$ und $R^3$ gleich oder verschieden sind und unabhängig voneinander jeweils Wasserstoff, gegebenenfalls substituiertes $C_1$-$C_{12}$-Alkyl, $C_5$-$C_7$-Cycloalkyl, gegebenenfalls substituiertes Phenyl, gegebenenfalls substituiertes Pyridyl, gegebenenfalls substituiertes $C_1$-$C_{12}$-Alkanoyl, $C_1$-$C_{12}$-Alkoxycarbonyl, gegebenenfalls substituiertes $C_1$-$C_{12}$-Alkylsulfonyl, $C_5$-$C_7$-Cycloalkylsulfonyl, gegebenenfalls substituiertes Phenylsulfonyl, gegebenenfalls substituiertes Pyridylsulfonyl, gegebenenfalls substituiertes Benzoyl, Pyridylcarbonyl oder Thienylcarbonyl oder $R^2$ und $R^3$ zusammen mit dem sie verbindenden Stickstoffatom gegebenenfalls durch $C_1$-$C_4$-Alkyl substituiertes Succinimido, gegebenenfalls durch $C_1$-$C_4$-Alkyl substituiertes Phthalimido oder einen fünf- oder sechsgliedrigen gesättigten heterocyclischen Rest, der gegebenenfalls weitere Heteroatome enthält,

X CH oder Stickstoff,

Y Cyano oder einen Rest der Formel CO-W, CO-OW oder CO-NHW, worin W für Wasserstoff, $C_1$-$C_8$-Alkyl, das gegebenenfalls substituiert ist und durch ein oder zwei Sauerstoffatome in Etherfunktion unterbrochen sein kann, $C_5$-$C_7$-Cycloalkyl, Phenyl oder Tolyl steht, und

Z einen aromatischen carbocyclischen oder heterocyclischen Rest bedeuten,

dadurch gekennzeichnet, daß man Formyl- (X=CH) oder Nitrosoverbindungen (X=N) der Formel IV

$$Z - X = O \qquad (IV),$$

in der Z die obengenannte Bedeutung besitzt, mit einem Pyridon der Formel V

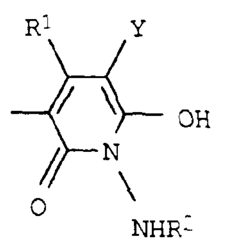

(V),

in der $R^1$, $R^2$ und Y jeweils die obengenannte Bedeutung besitzen, in einem inerten Lösungsmittel in Gegenwart eines Katalysators kondensiert.

**2.** Verfahren nach Anspruch 1, dadurch gekennzeichnet, daß Z einen Rest der Formel

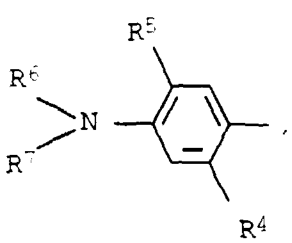

(IIa),

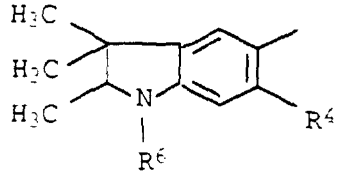

(IIb),

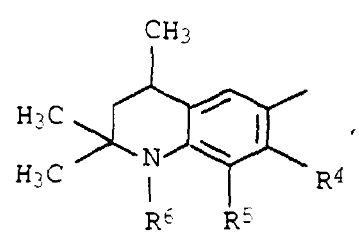

(IIc),

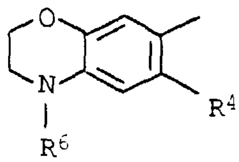,

(IId)

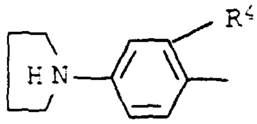,

(IIe)

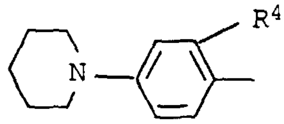,

(IIf)

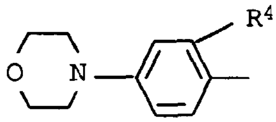,

(IIg)

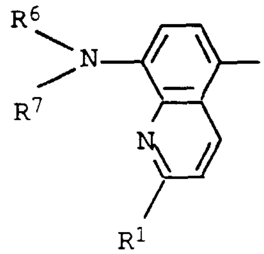,

(IIh)

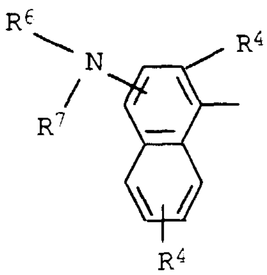,

(IIi)

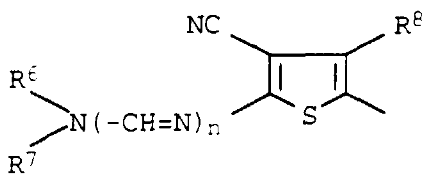,

(IIj)

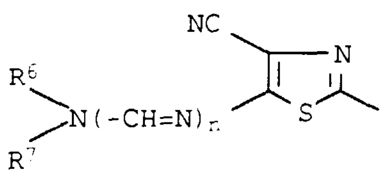,

(IIk)

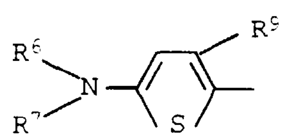,

(IIl)

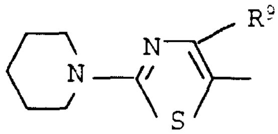,

(IIm)

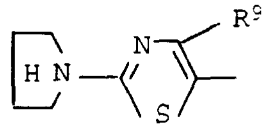,

(IIn)

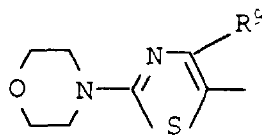

oder

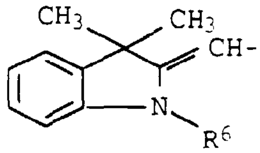

(IIo) (IIp)

bedeutet, worin

n 0 oder 1,

$R^4$ für Wasserstoff, Methyl, Methoxy, $C_1$-$C_4$-Alkylsulfonylamino, $C_1$-$C_4$-Mono- oder -Dialkylaminosulfonylamino oder den Rest -$NHCOR^{10}$ oder -$NHCO_2R^{10}$, wobei $R^{10}$ die Bedeutung von Phenyl, Benzyl, Tolyl oder $C_1$-$C_8$-Alkyl, das gegebenenfalls durch ein oder zwei Sauerstoffatome in Etherfunktion unterbrochen ist, besitzt,

$R^5$ für Wasserstoff, Methyl, Methoxy oder Ethoxy,

$R^6$ und $R^7$ gleich oder verschieden sind und unabhängig voneinander jeweils für Wasserstoff, $C_1$-$C_8$-Alkyl, das gegebenenfalls substituiert ist und durch ein oder zwei Sauerstoffatome in Etherfunktion unterbrochen sein kann, $C_3$-$C_4$-Alkenyl, $C_5$-$C_7$-Cycloalkyl, Phenyl oder Tolyl oder zusammen mit dem sie verbindenden Stickstoffatom für einen fünf- oder sechsgliedrigen gesättigten heterocyclischen Rest, der gegebenenfalls weitere Heteroatome enthält,

$R^8$ Halogen und

$R^9$ für Wasserstoff, Halogen, $C_1$-$C_6$-Alkyl, gegebenenfalls substituiertes Phenyl, gegebenenfalls substituertes Benzyl, Cyclohexyl, Thienyl, Hydroxy oder $C_1$-$C_8$-Monoalkylamino stehen und

$R^1$ die in Anspruch 1 genannte Bedeutung besitzen.

**3.** Verfahren zur Übertragung von Pyridonfarbstoffen von einem Träger auf ein mit Kunststoff beschichtetes Papier durch Diffusion oder Sublimation mit Hilfe einer Energiequelle, dadurch gekennzeichnet, daß man einen Träger verwendet, auf dem sich ein oder mehrere Farbstoffe der Formel I gemäß Anspruch 1 befinden.

## Claims

### Claims for the following Contracting States : BE, CH, DE, FR, GB, IT, LI, NL, SE

**1.** A pyridone dye of the formula I

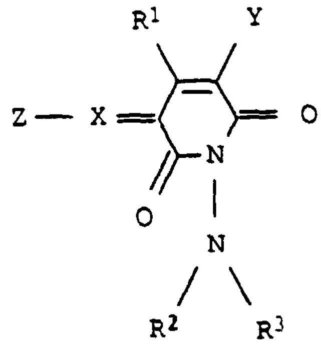

(I)

where

| | |
|---|---|
| $R^1$ | is $C_1$-$C_4$-alkyl, |
| $R^2$ and $R^3$ | are identical or different and each is, independently of the other, hydrogen, substituted or unsubstituted $C_1$-$C_{12}$-alkyl, $C_5$-$C_7$-cycloalkyl, substituted or unsubstituted phenyl, substituted or unsubstituted pyridyl, substituted or unsubstituted $C_1$-$C_{12}$-alkanoyl, $C_1$-$C_{12}$-alkoxycarbonyl, substituted or unsubstituted $C_1$-$C_{12}$-alkylsulfonyl, $C_5$-$C_7$-cycloalkylsulfonyl, substituted or unsubstituted phenylsulfonyl, substituted or unsubstituted pyridylsulfonyl, substituted or unsubstituted benzoyl, pyridylcarbonyl or thienylcarbonyl or are together with the nitrogen atom to which they are bonded unsubstituted or $C_1$-$C_4$-alkyl-substituted succinimido, unsubstituted or $C_1$-$C_4$-alkyl-substituted phthalimido or a five- or six-membered saturated heterocyclic radical which may contain further hetero atoms, |
| X | is CH or nitrogen, |
| Y | is cyano or a radical of the formula CO-W, CO-OW or CO-NHW where W is hydrogen, $C_1$-$C_8$-alkyl which may be substituted and which may be interrupted by one or two oxygen atoms in ether function, $C_5$-$C_7$-cycloalkyl, phenyl or tolyl, and |
| Z | is an aromatic carbocyclic or heterocyclic radical. |

**2.** A pyridone dye as claimed in claim 1, wherein Z is a radical of the formula

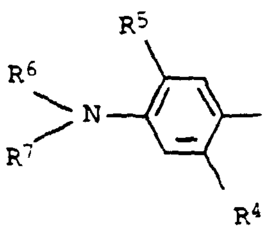

,

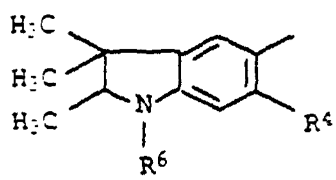

,

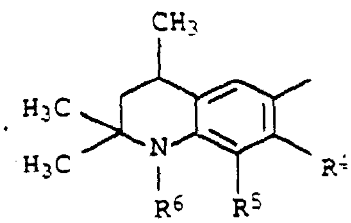

,

(IIa) (IIb) (IIc)

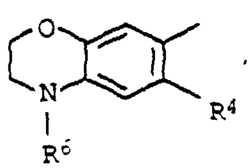

,

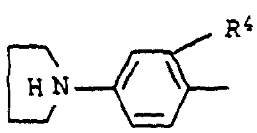

,

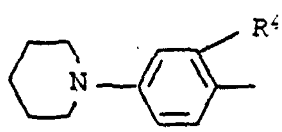

,

(IId) (IIe) (IIf)

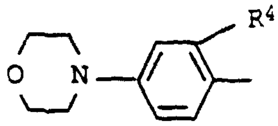

,

(IIg)

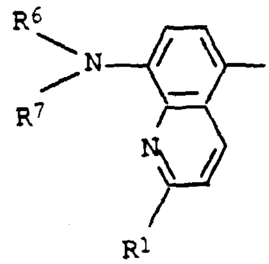

,

(IIh)

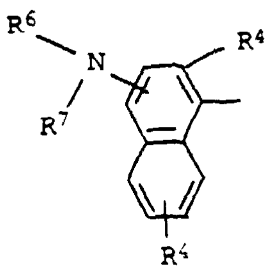

,

(IIi)

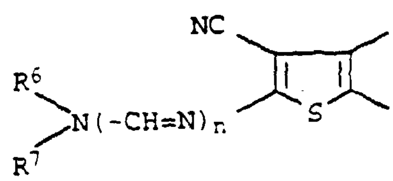

,

(IIj)

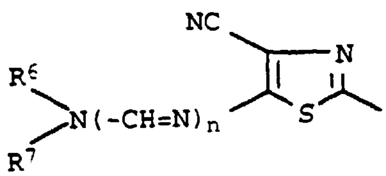

,

(IIk)

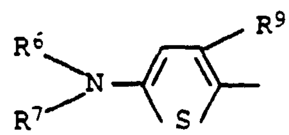

,

(IIl)

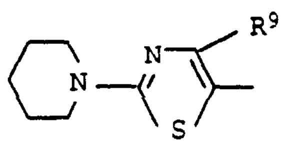

,

(IIm)

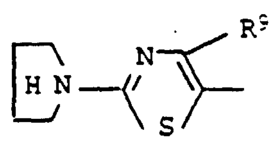

,

(IIn)

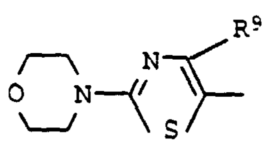

or

(IIo)

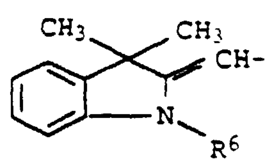

(IIp)

where

n is 0 or 1,

$R^4$ is hydrogen, methyl, methoxy, $C_1$-$C_4$-alkylsulfonylamino, mono- or di-$C_1$-$C_4$-alkylaminosulfonylami-

no or the radical -NHCOR$^{10}$ or -NHCO$_2$R$^{10}$, where R$^{10}$ is phenyl, benzyl, tolyl or $C_1$-$C_8$-alkyl, which may be interrupted by one or two oxygen atoms in ether function,

$R^5$ is hydrogen, methyl, methoxy or ethoxy,

$R^6$ and $R^7$ are identical or different and each is independently of the other hydrogen, $C_1$-$C_8$-alkyl, which may be substituted and which may be interrupted by one or two oxygen atoms in ether function, $C_3$-$C_4$-alkenyl, $C_5$-$C_7$-cycloalkyl, phenyl or tolyl or are together with the nitrogen atom to which they are bonded a five- or six-membered saturated heterocyclic radical which may contain further hetero atoms,

$R^8$ is halogen and

$R^9$ is hydrogen, halogen, $C_1$-$C_6$-alkyl, substituted or unsubstituted phenyl, substituted or unsubstituted benzyl, cyclohexyl, thienyl, hydroxyl or mono-$C_1$-$C_8$-alkylamino, and

$R^1$ is as defined in claim 1.

**3.** A process for transferring a pyridone dye from a transfer to a polymer-coated paper by diffusion or sublimation with the aid of an energy source, which comprises using a transfer comprising one or more dyes of the formula I as claimed in claim 1.

**Claims for the following Contracting State : ES**

**1.** A process for preparing a pyridone dye of the formula I

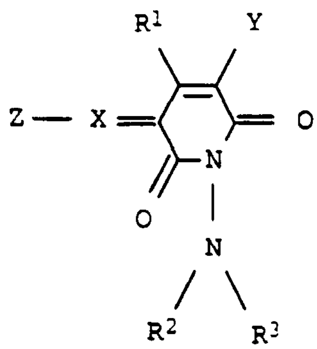

(I)

where

$R^1$ is $C_1$-$C_4$-alkyl,

$R^2$ and $R^3$ are identical or different and each is, independently of the other, hydrogen, substituted or unsubstituted $C_1$-$C_{12}$-alkyl, $C_5$-$C_7$-cycloalkyl, substituted or unsubstituted phenyl, substituted or unsubstituted pyridyl, substituted or unsubstituted $C_1$-$C_{12}$-alkanoyl, $C_1$-$C_{12}$-alkoxycarbonyl, substituted or unsubstituted $C_1$-$C_{12}$-alkylsulfonyl, $C_5$-$C_7$-cycloalkylsulfonyl, substituted or unsubstituted phenylsulfonyl, substituted or unsubstituted pyridylsulfonyl, substituted or unsubstituted benzoyl, pyridylcarbonyl or thienylcarbonyl or are together with the nitrogen atom to which they are bonded unsubstituted or $C_1$-$C_4$-alkyl-sustituted succinimido, unsubstituted or $C_1$-$C_4$-alkyl-substituted phthalimido or a five- or six-membered saturated heterocyclic radical which may contain further hetero atoms,

X is CH or nitrogen,

Y is cyano or a radical of the formula CO-W, CO-OW or CO-NHW where W is hydrogen, $C_1$-$C_8$-alkyl which may be substituted and which may be interrupted by one or two oxygen atoms in ether function, $C_5$-$C_7$-cycloalkyl, phenyl or tolyl, and

Z is an aromatic carbocyclic or heterocyclic radical, which comprises condensing formyl (X=CH) or nitroso compounds (X=N) of the formula IV

$$Z\text{-}X\text{=}O \qquad (IV)$$

where Z is as defined above, with a pyridone of the formula V

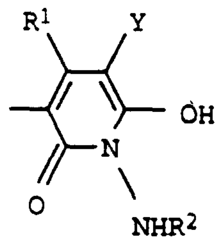

(V)

where $R^1$, $R^2$ and Y are each as defined above, in an inert solvent in the presence of a catalyst.

**2.** A process as claimed in claim 1, wherein Z is a radical of the formula

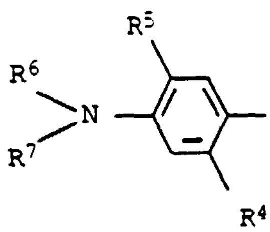 ,

(IIa)

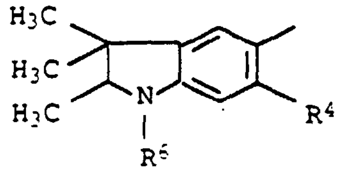 ,

(IIb)

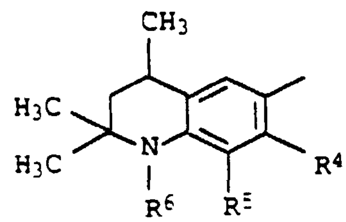 ,

(IIc)

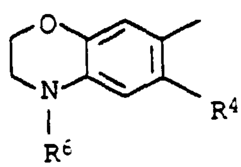 ,

(IId)

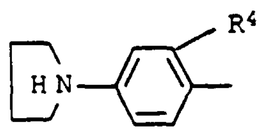 ,

(IIe)

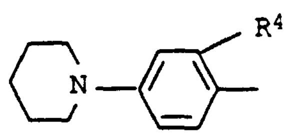 ,

(IIf)

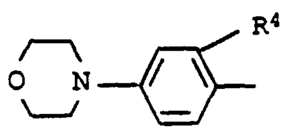 ,

(IIg)

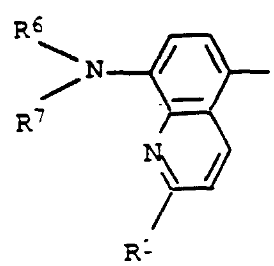 ,

(IIh)

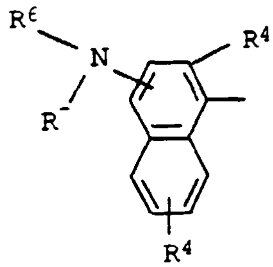

(IIi)

,

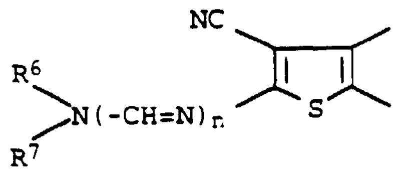

(IIj)

,

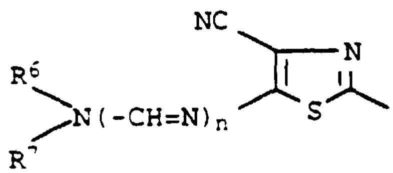

(IIk)

,

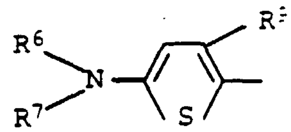

(IIl)

,

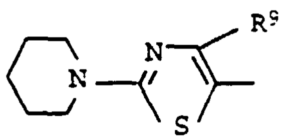

(IIm)

,

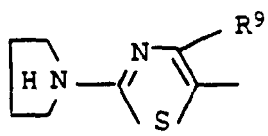

(IIn)

,

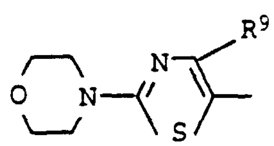

(IIo)

or

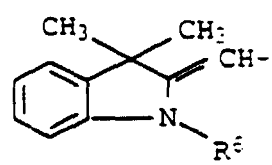

(IIp)

where

| | |
|---|---|
| n | is 0 or 1, |
| $R^4$ | is hydrogen, methyl, methoxy, $C_1$-$C_4$-alkylsulfonylamino, mono- or di-$C_1$-$C_4$-alkylaminosulfonylamino or the radical -$NHCOR^{10}$ or -$NHCO_2R^{10}$, where $R^{10}$ is phenyl, benzyl, tolyl or $C_1$-$C_8$-alkyl, which may be interrupted by one or two oxygen atoms in ether function, |
| $R^5$ | is hydrogen, methyl, methoxy or ethoxy, |
| $R^6$ and $R^7$ | are identical or different and each is independently of the other hydrogen, $C_1$-$C_8$-alkyl, which may be substituted and which may be interrupted by one or two oxygen atoms in ether function, $C_3$-$C_4$-alkenyl, $C_5$-$C_7$-cycloalkyl, phenyl or tolyl or are together with the nitrogen atom to which they are bonded a five- or six-membered saturated heterocyclic radical which may contain further hetero atoms, |
| $R^8$ | is halogen and |

| | |
|---|---|
| $R^9$ | is hydrogen, halogen, $C_1$-$C_6$-alkyl, substituted or unsubstituted phenyl, substituted or unsubstituted benzyl, cyclohexyl, thienyl, hydroxyl or mono-$C_1$-$C_8$-alkylamino, and |
| $R^1$ | is as defined in claim 1. |

**3.** A process for transferring a pyridone dye from a transfer to a polymer-coated paper by diffusion or sublimation with the aid of an energy source, which comprises using a transfer comprising one or more dyes of the formula I as claimed in claim 1.

## Revendications

### Revendications pour les Etats contractants suivants : BE, CH, DE, FR, GB, IT, LI, NL, SE

**1.** Colorants pyridoniques de la formule I

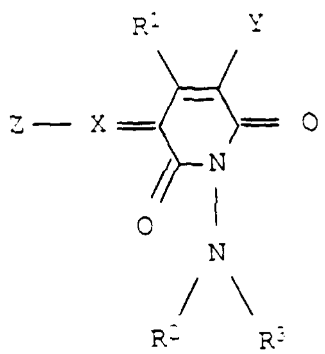

(I),

dans laquelle

| | |
|---|---|
| $R^1$ | représente un radical alkyle en $C_1$ à $C_4$, |
| $R^2$ et $R^3$ | sont identiques ou différents et représentent chacun indépendamment, un atome d'hydrogène, un radical cycloalkyle en $C_5$ à $C_7$, un radical alkyle en $C_1$ à $C_{12}$, éventuellement substitué, un radical phényle éventuellement substitué, un radical pyridyle éventuellement substitué, un radical alcoxycarbonyle en $C_1$ à $C_{12}$, un radical alcanoyle en $C_1$ à $C_{12}$, éventuellement substitué, un radical cycloalkylsulfonyle en $C_5$ à $C_7$, un radical alkylsulfonyle en $C_1$ à $C_{12}$, éventuellement substitué, un radical phénylsulfonyle éventuellement substitué, un radical pyridylsulfonyle éventuellement substitué, un radical thiénylcarbonyle, un radical pyridylcarbonyle, ou un radical benzoyle, éventuellement substitué, ou bien $R^2$ et $R^3$ forment ensemble avec l'atome d'azote qui les relie, un radical succinimido à substitution alkylique en $C_1$ à $C_4$ éventuelle, un radical phtalylimido à substitution alkylique en $C_1$ à $C_4$ éventuelle, ou un radical hétérocyclique saturé, pentagonal ou hexagonal, qui contient éventuellement d'autres hétéroatomes, |
| X | représente le radical CH ou un atome d'azote, |
| Y | représente le radical cyano ou un radical de la formule CO-W, CO-OW ou CO-NHW, où W représente un atome d'hydrogène, un radical alkyle en $C_1$ à $C_8$, qui est éventuellement substitué et qui peut être interrompu par un ou deux atomes d'oxygène, en fonction éther, un radical cycloalkyle en $C_5$ à $C_7$, un radical phényle ou tolyle et |
| Z | représente un radical hétérocyclique ou carbocyclique aromatique. |

**2.** Colorants pyridoniques suivant la revendication 1, caractérisés en ce que

| | |
|---|---|
| Z | représente un radical de la formule |

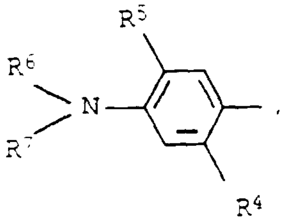

(IIa) ,

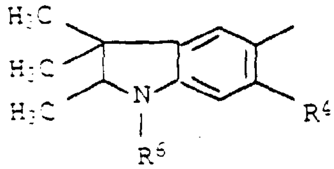

(IIb) ,

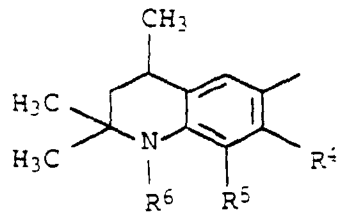

(IIc) ,

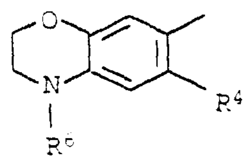

(IId) ,

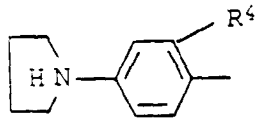

(IIe) ,

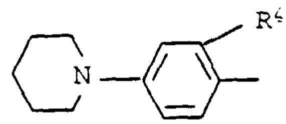

(IIf) ,

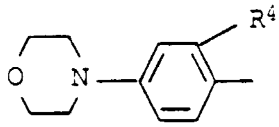

(IIg) ,

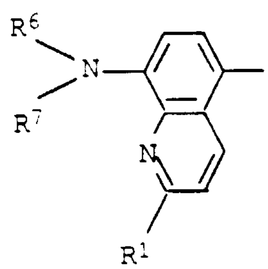

(IIh) ,

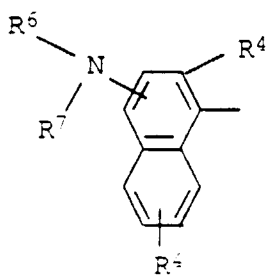

(IIi) ,

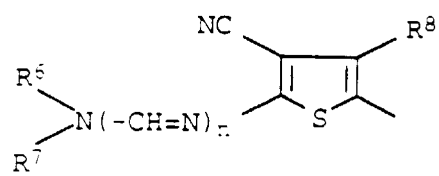

(IIj) ,

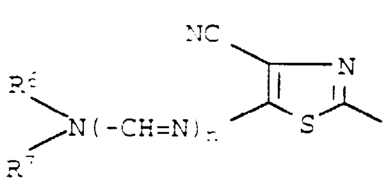

(IIk) ,

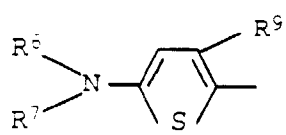

(IIl) ,

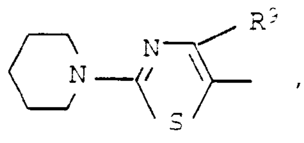 ,

(IIm)

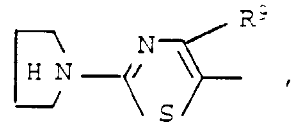 ,

(IIn)

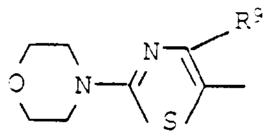

(IIo)

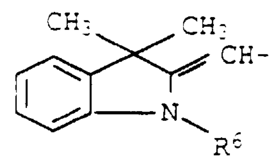

(IIp)

où

- n est égal à 0 ou à 1,
- $R^4$ représente un atome d'hydrogène, un radical méthyle, un radical méthoxy, un radical alkylsulfonylamino en $C_1$ à $C_4$, un radical mono- ou dialkylaminosulfonylamino en $C_1$ à $C_4$, ou le groupement -$NHCOR^{10}$ ou -$NHCO_2R^{10}$, où $R^{10}$ représente un radical phényle, un radical benzyle, un radical tolyle ou un radical alkyle en $C_1$ à $C_8$, qui est éventuellement interrompu par un ou deux atomes d'oxygène, en fonction éther,
- $R^5$ représente un atome d'hydrogène, un radical méthyle, un radical méthoxy, ou un radical éthoxy,
- $R^6$ et $R^7$ qui sont identiques ou différents, représentent chacun indépendamment un atome d'hydrogène, un radical alkyle en $C_1$ à $C_8$, qui est éventuellement substitué et qui peut être interrompu par un ou deux atomes d'oxygène, une fonction éther, un radical alcényle en $C_3$-$C_4$, un radical cycloalkyle en $C_5$-$C_7$, un radical phényle ou un radical tolyle, ou bien forment ensemble avec l'atome d'azote qui les relie, un radical hétérocyclique saturé, pentagonal ou hexagonal, qui contient éventuellement d'autres hétéroatomes,
- $R^8$ représente un atome d'halogène et
- $R^9$ représente un atome d'hydrogène, un atome d'halogène, un radical alkyle en $C_1$ à $C_6$, un radical phényle éventuellement substitué, un radical thiényle, cyclohexyle, benzyle, éventuellement substitué, un radical hydroxyle ou un radical monoalkylamino en $C_1$ à $C_8$ et
- $R^1$ possède les significations qui lui ont été attribuées dans la revendication 1.

**3.** Procédé de transfert de colorants pyridoniques d'un support sur un papier recouvert de matière plastique, par diffusion ou sublimation, à l'aide d'une source d'énergie, caractérisé en ce que l'on utilise un support sur lequel se trouvent un ou plusieurs colorants de la formule I, suivant la revendication 1.

**Revendications pour l'Etat contractant suivant : ES**

**1.** Procédé de préparation de colorants pyridoniques de la formule I

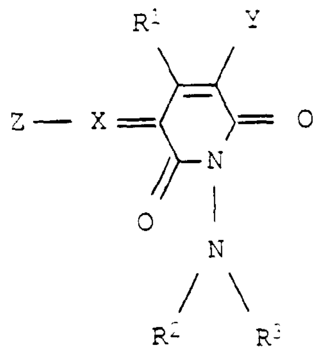

(I),

dans laquelle

| | |
|---|---|
| $R^1$ | représente un radical alkyle en $C_1$ à $C_4$, |
| $R^2$ et $R^3$ | sont identiques ou différents et représentent chacun indépendamment, un atome d'hydrogène, un radical cycloalkyle en $C_5$ à $C_7$, un radical alkyle en $C_1$ à $C_{12}$, éventuellement substitué, un radical phényle éventuellement substitué, un radical pyridyle éventuellement substitué, un radical alcoxycarbonyle en $C_1$ à $C_{12}$, un radical alcanoyle en $C_1$ à $C_{12}$, éventuellement substitué, un radical cycloalkylsulfonyle en $C_5$ à $C_7$, un radical alkylsulfonyle en $C_1$ à $C_{12}$, éventuellement substitué, un radical phénylsulfonyle éventuellement substitué, un radical pyridylsulfonyle éventuellement substitué, un radical thiénylcarbonyle, un radical pyridylcarbo-nyle, ou un radical benzoyle, éventuellement substitué, ou bien $R^2$ et $R^3$ forment ensemble avec l'atome d'azote qui les relie, un radical succinimido à substitution alkylique en $C_1$ à $C_4$ éventuelle, un radical phtalylimido à substitution alkylique en $C_1$ à $C_4$ éventuelle, ou un radical hétérocyclique saturé, pentagonal ou hexagonal, qui contient éventuellement d'autres hétéroatomes, |
| X | représente le radical CH ou un atome d'azote, |
| Y | représente le radical cyano ou un radical de la formule CO-W, CO-OW ou CO-NHW, où W représente un atome d'hydrogène, un radical alkyle en $C_1$ à $C_8$, qui est éventuellement substitué et qui peut être interrompu par un ou deux atomes d'oxygène, en fonction éther, un radical cycloalkyle en $C_5$ à $C_7$, un radical phényle ou tolyle et |
| Z | représente un radical hétérocyclique ou carbocyclique aromatique, |

caractérisé en ce que l'on condense des composés du type formyle (X=CH) ou nitroso (X=N) de la formule IV

$$Z - X = O \qquad (IV),$$

dans laquelle Z possède les significations qui lui ont été précédemment attribuées, avec une pyridone de la formule V

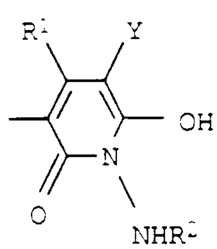

(V),

dans laquelle $R^1$, $R^2$ et Y possèdent chacun les significations qui leur ont été précédemment attribuées, dans un solvant inerte, en présence d'un catalyseur.

**2.** Procédé suivant la revendication 1, caractérisé en ce que

Z représente un radical de la formule

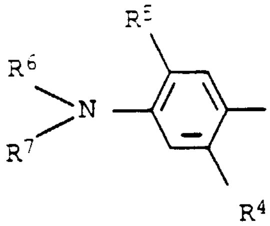

(IIa) ,

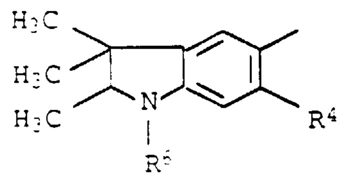

(IIb) ,

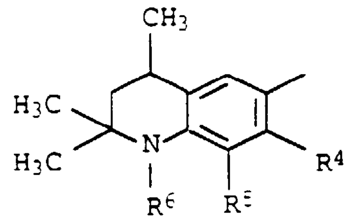

(IIc) ,

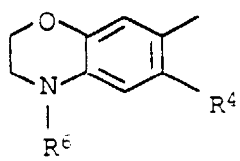

(IId) ,

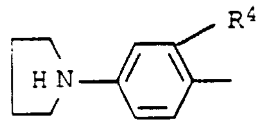

(IIe) ,

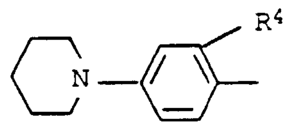

(IIf) ,

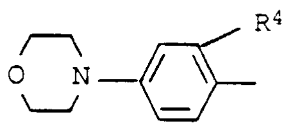

(IIg) ,

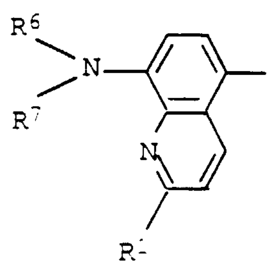

(IIh) ,

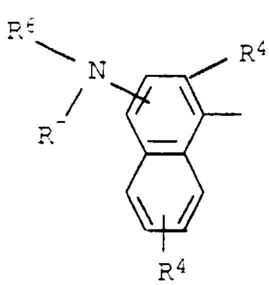

(IIi) ,

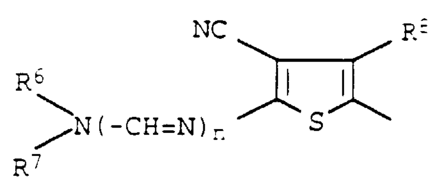

(IIj)

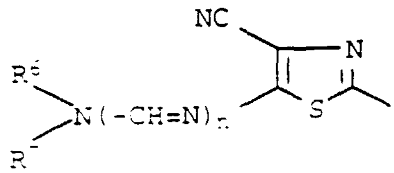

,

(IIk)

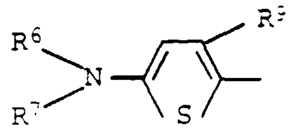

,

(IIl)

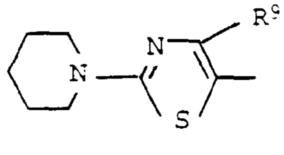

,

(IIm)

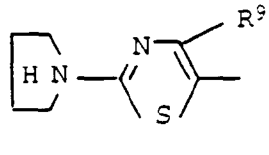

,

(IIn)

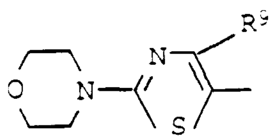

(IIo)

oder

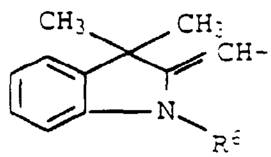

(IIp)

où

- n est égal à 0 ou à 1,
- $R^4$ représente un atome d'hydrogène, un radical méthyle, un radical méthoxy, un radical alkylsulfonylamino en $C_1$ à $C_4$, un radical mono- ou dialkylaminosulfonylamino en $C_1$ à $C_4$, ou le groupement -NHCOR$^{10}$ ou -NHCO$_2$R$^{10}$, où $R^{10}$ représente un radical phényle, un radical benzyle, un radical tolyle ou un radical alkyle en $C_1$ à $C_8$, qui est éventuellement interrompu par un ou deux atomes d'oxygène, en fonction éther,
- $R^5$ représente un atome d'hydrogène, un radical méthyle, un radical méthoxy, ou un radical éthoxy,
- $R^6$ et $R^7$ qui sont identiques ou différents, représentent chacun indépendamment un atome d'hydrogène, un radical alkyle en $C_1$ à $C_8$, qui est éventuellement substitué et qui peut être interrompu par un ou deux atomes d'oxygène, une fonction éther, un radical alcényle en $C_3$-$C_4$, un radical cycloalkyle en $C_5$-$C_7$, un radical phényle ou un radical tolyle, ou bien forment ensemble avec l'atome d'azote qui les relie, un radical hétérocyclique saturé, pentagonal ou hexagonal, qui contient éventuellement d'autres hétéroatomes,
- $R^8$ représente un atome d'halogène et
- $R^9$ représente un atome d'hydrogène, un atome d'halogène, un radical alkyle en $C_1$ à $C_6$, un radical phényle éventuellement substitué, un radical thiényle, cyclohexyle, benzyle, éventuellement substitué, un radical hydroxyle ou un radical monoalkylamino en $C_1$ à $C_8$ et
- $R^1$ possède les significations qui lui ont été attribuées dans la revendication 1.

**3.** Procédé de transfert de colorants pyridoniques d'un support sur un papier recouvert de matière plastique, par diffusion ou sublimation, à l'aide d'une source d'énergie, caractérisé en ce que l'on utilise un support sur lequel se trouvent un ou plusieurs colorants de la formule I, suivant la revendication 1.